# EUROPEAN PATENT SPECIFICATION

(11) **EP 4 461 016 B1**
(45) Date of publication and mention of the grant of the patent: **25.03.2026**
(21) Application number: 22851360.2
(22) Date of filing: 21.12.2022
(51) Int. Cl.: H04W 36/00, H04W 36/24, H04W 84/06

(54) **PERFORMING MEASUREMENTS FOR NON-TERRESTRIAL NETWORKS**
DURCHFÜHRUNG VON MESSUNGEN FÜR NICHT TERRESTRISCHE NETZWERKE
EXÉCUTION DE MESURES DE RÉSEAUX NON TERRESTRES

(30) Priority: 07.01.2022 US 202263266565 P; 20.12.2022 US 202218069014
(43) Date of publication of application: 13.11.2024
(73) Proprietor: QUALCOMM INCORPORATED, San Diego, California 92121-1714 (US)
(72) Inventor: PARK, Changhwan, San Diego, California 92121 (US); RYU, Jae Ho, San Diego, California 92121 (US); WANG, Xiao Feng, San Diego, California 92121 (US); SHRESTHA, Bharat, San Diego, California 92121 (US); MA, Liangping, San Diego, California 92121 (US)
(74) Representative: Tomkins & Co
(86) International application number: PCT/US2022/082125
(87) International publication number: WO 2023/133044

(56) References cited:
- EP-A2- 1 944 995
- ERICSSON: "General requirements for NTN", vol. RAN WG4, no. Electronic meeting; 20211101 - 20211112, 22 October 2021 (2021-10-22), XP052069768, Retrieved from the Internet <URL:https://ftp.3gpp.org/tsg_ran/WG4_Radio/TSGR4_101-e/Docs/R4-2118347.zip R4-2118347 General RRM for NTN.docx> [retrieved on 20211022]
- LG ELECTRONICS: "Discussion on latency improvements for NR positioning", vol. RAN WG1, no. e-Meeting; 20211111 - 20211119, 5 November 2021 (2021-11-05), XP052074345, Retrieved from the Internet <URL:https://ftp.3gpp.org/tsg_ran/WG1_RL1/TSGR1_107-e/Docs/R1-2111976.zip R1-2111976_LG_latency.docx> [retrieved on 20211105]
- QUALCOMM INCORPORATED: "Measurement procedure requirements", vol. RAN WG4, no. Electronic Meeting; 20220117 - 20220125, 10 January 2022 (2022-01-10), XP052094830, Retrieved from the Internet <URL:https://ftp.3gpp.org/tsg_ran/WG4_Radio/TSGR4_101-bis-e/Docs/R4-2200422.zip R4-2200422 6.13.5.5 [NTN] Measurement procedure requirements.docx> [retrieved on 20220110]

## Description

### CROSS-REFERENCE TO RELATED APPLICATIONS

This Patent Application claims priority to U.S. Provisional Patent Application No. 63/266,565, filed on January 7, 2022, entitled "PERFORMING MEASUREMENTS FOR NON-TERRESTRIAL NETWORKS," and U.S. Nonprovisional Patent Application No. 18/069,014, filed on December 20, 2022, entitled "PERFORMING MEASUREMENTS FOR NON-TERRESTRIAL NETWORKS".

### INTRODUCTION

Aspects of the present disclosure generally relate to wireless communication and to techniques and apparatuses for communications in non-terrestrial networks (NTNs).

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include one or more base stations that support communication for a user equipment (UE) or multiple UEs. A UE may communicate with a base station via downlink communications and uplink communications. "Downlink" (or "DL") refers to a communication link from the base station to the UE, and "uplink" (or "UL") refers to a communication link from the UE to the base station.

The above multiple access technologies have been adopted in various telecommunication standards to provide a common protocol that enables different UEs to communicate on a municipal, national, regional, and/or global level. New Radio (NR), which may be referred to as 5G, is a set of enhancements to the LTE mobile standard promulgated by the 3GPP. NR is designed to better support mobile broadband internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink, using CP-OFDM and/or single-carrier frequency division multiplexing (SC-FDM) (also known as discrete Fourier transform spread OFDM (DFT-s-OFDM)) on the uplink, as well as supporting beamforming, multiple-input multiple-output (MIMO) antenna technology, and carrier aggregation. As the demand for mobile broadband access continues to increase, further improvements in LTE, NR, and other radio access technologies remain useful.

EP 1944995 discloses a method for measuring a wireless link quality by a user equipment, UE, in a communication system. The method comprises: receiving a message including candidate transmission gap configurations and a serving cell quality threshold from a wireless access network; selecting a transmission gap configuration from the candidate transmission gap configurations; transmitting information indicating the selected transmission gap configuration to the network; and performing quality measurement for wireless links of neighboring cells during a period according to the transmission gap configuration, based on a result of a comparison between a wireless link quality of a serving cell and the serving cell quality threshold.

3GPP Draft, R4-2118347 discloses that, given the characteristics of NTN, differentiating measurement requirements (e.g. measurement rate, periodicity, time etc.) and measurement procedure and configurations (e.g. number of SMTC/MG in multi-SMTC/MG configuration) shall be necessary, which relies on whether UE is provided with necessary information, e.g. ephemeris data of neighbor cell by serving cell.

### SUMMARY

In some implementations, an apparatus for wireless communication at a user equipment (UE) includes a memory and one or more processors coupled to the memory. The one or more processors may be configured to receive, from a serving node in a non-terrestrial network (NTN), a measurement configuration that indicates multiple candidate measurement gaps. The one or more processors may be configured to transmit, to the serving node, an indication of one or more measurement gaps and a time duration for which the one or more measurement gaps are valid at the UE, the one or more measurement gaps being selected from the multiple candidate measurement gaps indicated in the measurement configuration based at least in part on one or more characteristics of the serving node or the UE.

In some implementations, an apparatus for wireless communication at a serving node includes a memory and one or more processors coupled to the memory. The one or more processors may be configured to output, from the serving node which is associated with a serving cell in an NTN, a measurement configuration that indicates multiple candidate measurement gaps. The one or more processors may be configured to obtain an indication of a set of measurement gaps selected from the multiple candidate measurement gaps indicated in the measurement configuration and an amount of time for which the set of measurement gaps is valid.

In some implementations, a method of wireless communication performed by a UE includes receiving, from a serving node in an NTN, a measurement configuration that indicates multiple candidate measurement gaps. The method includes transmitting, to the serving node, an indication of one or more measurement gaps and a time duration for which the one or more measurement gaps are valid at the UE, the one or more measurement gaps being selected from the multiple candidate measurement gaps indicated in the measurement configuration based at least in part on one or more characteristics of the serving node or the UE.

In some implementations, a method of wireless communication performed by a serving node includes outputting, from the serving node which is associated with a serving cell in an NTN, a measurement configuration that indicates multiple candidate measurement gaps. The method includes obtaining an indication of a set of measurement gaps selected from the multiple candidate measurement gaps indicated in the measurement configuration and an amount of time for which the set of measurement gaps is valid.

In some implementations, a non-transitory computer-readable medium storing a set of instructions for wireless communication includes one or more instructions that, when executed by one or more processors of a UE, cause the UE to receive, from a serving node in an NTN, a measurement configuration that indicates multiple candidate measurement gaps. The one or more instructions, when executed by the one or more processors of the UE, cause the UE to transmit, to the serving node, an indication of one or more measurement gaps and a time duration for which the one or more measurement gaps are valid at the UE, the one or more measurement gaps being selected from the multiple candidate measurement gaps indicated in the measurement configuration based at least in part on one or more characteristics of the serving node or the UE.

In some implementations, a non-transitory computer-readable medium storing a set of instructions for wireless communication includes one or more instructions that, when executed by one or more processors of a serving node, cause the serving node to output, from the serving node in an NTN, a measurement configuration that indicates multiple candidate measurement gaps. The one or more instructions, when executed by the one or more processors of the serving node, cause the serving node to obtain an indication of one or more measurement gaps selected from the multiple candidate measurement gaps indicated in the measurement configuration and a time duration for which the set of measurement gaps are valid at a UE.

In some implementations, an apparatus for wireless communication includes means for receiving, from a serving node in an NTN, a measurement configuration that indicates multiple candidate measurement gaps. The apparatus includes means for transmitting, to the serving node, an indication of one or more measurement gaps and a time duration for which the one or more measurement gaps are valid at the apparatus, the one or more measurement gaps being selected from the multiple candidate measurement gaps indicated in the measurement configuration based at least in part on one or more characteristics of the serving node or the UE.

In some implementations, an apparatus for wireless communication includes means for outputting, from the serving node in an NTN, a measurement configuration that indicates multiple candidate measurement gaps. The apparatus includes means for obtaining an indication of one or more measurement gaps selected from the multiple candidate measurement gaps indicated in the measurement configuration and a time duration for which the set of measurement gaps are valid at a UE.

In some implementations, an apparatus for wireless communication at a UE includes a memory and one or more processors coupled to the memory. The one or more processors may be configured to determine a scaling factor for a UE measurement period based at least in part on the UE being associated with an NTN. The one or more processors may be configured to perform a measurement during a scaled UE measurement period based at least in part on the scaling factor and the UE measurement period.

In some implementations, an apparatus for wireless communication at a UE includes a memory and one or more processors coupled to the memory. The processors may be configured to receive, from a serving node associated with an NTN, a configuration that indicates multiple synchronization signal block (SSB) measurement timing configurations (SMTCs) for a measurement frequency. The one or more processors may be configured to perform cell search functions using a cell search engine that is shared among multiple measurement frequencies, wherein the multiple measurement frequencies are based at least in part on the measurement frequency, and each measurement frequency of the multiple measurement frequencies is associated with a different SMTC from the multiple SMTCs for the measurement frequency.

In some implementations, an apparatus for wireless communication at a UE includes a memory and one or more processors coupled to the memory. The one or more processors may be configured to receive, from a serving node in an NTN, a measurement configuration that indicates multiple candidate measurement gaps. The one or more processors may be configured to select one or more measurement gaps from the multiple candidate measurement gaps indicated in the measurement configuration based at least in part on one or more characteristics of the serving node or the UE. The one or more processors may be configured to transmit, to the serving node, an indication of the one or more measurement gaps and a time duration for which the one or more measurement gaps are valid at the UE.

In some implementations, an apparatus for wireless communication at a serving node includes a memory and one or more processors coupled to the memory. The one or more processors may be configured to transmit, to a UE from the serving node which is associated with a serving cell in an NTN, a measurement configuration that indicates multiple candidate measurement gaps. The one or more processors may be configured to receive, from the UE, an indication of a set of measurement gaps selected from the multiple candidate measurement gaps indicated in the measurement configuration and an amount of time for which the set of measurement gaps is valid.

In some implementations, a method of wireless communication performed by a UE includes determining a scaling factor for a UE measurement period based at least in part on the UE being associated with an NTN. The method includes performing a measurement during a scaled UE measurement period based at least in part on the scaling factor and the UE measurement period.

In some implementations, a method of wireless communication performed by a UE includes receiving, from a serving node associated with an NTN, a configuration that indicates multiple SMTCs for a measurement frequency. The method includes performing cell search functions using a cell search engine that is shared among multiple measurement frequencies, wherein the multiple measurement frequencies are based at least in part on the measurement frequency, and each measurement frequency of the multiple measurement frequencies is associated with a different SMTC from the multiple SMTCs for the measurement frequency.

In some implementations, a method of wireless communication performed by a UE includes receiving, from a serving node in an NTN, a measurement configuration that indicates multiple candidate measurement gaps. The method includes selecting one or more measurement gaps from the multiple candidate measurement gaps indicated in the measurement configuration based at least in part on one or more characteristics of the serving node or the UE. The method includes transmitting, to the serving node, an indication of the one or more measurement gaps and a time duration for which the one or more measurement gaps are valid at the UE.

In some implementations, a method of wireless communication performed by a serving node includes transmitting, to a UE from the serving node which is associated with a serving cell in an NTN, a measurement configuration that indicates multiple candidate measurement gaps. The method includes receiving, from the UE, an indication of a set of measurement gaps selected from the multiple candidate measurement gaps indicated in the measurement configuration and an amount of time for which the set of measurement gaps is valid.

In some implementations, a non-transitory computer-readable medium storing a set of instructions for wireless communication includes one or more instructions that, when executed by one or more processors of a UE, cause the UE to determine a scaling factor for a UE measurement period based at least in part on the UE being associated with an NTN. The one or more instructions, when executed by the one or more processors of the UE, cause the UE to perform a measurement during a scaled UE measurement period based at least in part on the scaling factor and the UE measurement period.

In some implementations, a non-transitory computer-readable medium storing a set of instructions for wireless communication includes one or more instructions that, when executed by one or more processors of a UE, cause the UE to receive, from a serving node associated with an NTN, a configuration that indicates multiple SMTCs for a measurement frequency. The one or more instructions, when executed by the one or more processors of the UE, cause the UE to perform cell search functions using a cell search engine that is shared among multiple measurement frequencies, wherein the multiple measurement frequencies are based at least in part on the measurement frequency, and each measurement frequency of the multiple measurement frequencies is associated with a different SMTC from the multiple SMTCs for the measurement frequency.

In some implementations, a non-transitory computer-readable medium storing a set of instructions for wireless communication includes one or more instructions that, when executed by one or more processors of a UE, cause the UE to receive, from a serving node in an NTN, a measurement configuration that indicates multiple candidate measurement gaps. The one or more instructions, when executed by the one or more processors of the UE, cause the UE to select one or more measurement gaps from the multiple candidate measurement gaps indicated in the measurement configuration based at least in part on one or more characteristics of the serving node or the UE. The one or more instructions, when executed by the one or more processors of the UE, cause the UE to transmit, to the serving node, an indication of the one or more measurement gaps and a time duration for which the one or more measurement gaps are valid at the UE.

In some implementations, a non-transitory computer-readable medium storing a set of instructions for wireless communication includes one or more instructions that, when executed by one or more processors of a serving node, cause the serving node to transmit, to a UE from the serving node in an NTN, a measurement configuration that indicates multiple candidate measurement gaps. The one or more instructions, when executed by the one or more processors of the serving node, cause the serving node to receive, from the UE, an indication of one or more measurement gaps selected from the multiple candidate measurement gaps indicated in the measurement configuration and a time duration for which the set of measurement gaps are valid at the UE.

In some implementations, an apparatus for wireless communication includes means for determining a scaling factor for an apparatus measurement period based at least in part on the apparatus being associated with an NTN. The apparatus includes means for performing a measurement during a scaled apparatus measurement period based at least in part on the scaling factor and the apparatus measurement period.

In some implementations, an apparatus for wireless communication includes means for receiving, from a serving node associated with an NTN, a configuration that indicates multiple SMTCs for a measurement frequency. The apparatus includes means for performing cell search functions using a cell search engine that is shared among multiple measurement frequencies, wherein the multiple measurement frequencies are based at least in part on the measurement frequency, and each measurement frequency of the multiple measurement frequencies is associated with a different SMTC from the multiple SMTCs for the measurement frequency.

In some implementations, an apparatus for wireless communication includes means for receiving, from a serving node in an NTN, a measurement configuration that indicates multiple candidate measurement gaps. The apparatus includes means for selecting one or more measurement gaps from the multiple candidate measurement gaps indicated in the measurement configuration based at least in part on one or more characteristics of the serving node or the apparatus. The apparatus includes means for transmitting, to the serving node, an indication of the one or more measurement gaps and a time duration for which the one or more measurement gaps are valid at the apparatus.

In some implementations, an apparatus for wireless communication includes means for transmitting, to a UE from the serving node in an NTN, a measurement configuration that indicates multiple candidate measurement gaps. The apparatus includes means for receiving, from the UE, obtaining an indication of one or more measurement gaps selected from the multiple candidate measurement gaps indicated in the measurement configuration and a time duration for which the set of measurement gaps are valid at the UE.

Aspects generally include a method, apparatus, system, computer program product, non-transitory computer-readable medium, user equipment, base station, wireless communication device, and/or processing system as substantially described with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purpose of illustration and description, and not as a definition of the limits of the claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of a non-terrestrial network (NTN), in accordance with the present disclosure.
Figs. 4A and 4B are diagrams illustrating examples of cell deployments for non-geostationary satellites, in accordance with the present disclosure.
Figs. 5A and 5B are diagrams illustrating examples of a measurement configuration for the NTN, in accordance with the present disclosure.
Fig. 6 is a diagram illustrating an example associated with performing measurements for NTNs, in accordance with the present disclosure.
Fig. 7A is a diagram illustrating an example associated with performing measurements using a scaling factor, in accordance with the present disclosure.
Fig. 7B is a diagram illustrating an example associated with performing intra-frequency NR cell measurements using a scaling factor, in accordance with the present disclosure.
Fig. 8 is a diagram illustrating an example associated with performing measurements for NTNs, in accordance with the present disclosure.
Figs. 9A and 9B are diagrams illustrating examples associated with multiple measurement frequencies, in accordance with the present disclosure.
Fig. 10 is a diagram illustrating an example associated with selecting a set of measurement gaps, in accordance with the present disclosure.
Figs. 11A and 11B are diagrams illustrating examples associated with measurement gap selections and configurations, in accordance with the present disclosure.
Fig. 12 is a diagram illustrating an example associated with measurement gap selections and configurations, in accordance with the present disclosure.
Figs. 13-16 are diagrams illustrating example processes associated with performing measurements for NTNs, in accordance with the present disclosure.
Fig. 17 is a diagram of an example apparatus for wireless communication, in accordance with the present disclosure.
Fig. 18 is a diagram illustrating an example of a hardware implementation for an apparatus employing a processing system, in accordance with the present disclosure.
Fig. 19 is a diagram illustrating an example implementation of code and circuitry for an apparatus, in accordance with the present disclosure.
Fig. 20 is a diagram of an example apparatus for wireless communication, in accordance with the present disclosure.
Fig. 21 is a diagram illustrating an example of a hardware implementation for an apparatus employing a processing system, in accordance with the present disclosure.
Fig. 22 is a diagram illustrating an example implementation of code and circuitry for an apparatus, in accordance with the present disclosure.
Fig. 23 is a diagram of an example apparatus for wireless communication, in accordance with the present disclosure.
Fig. 24 is a diagram illustrating an example of a hardware implementation for an apparatus employing a processing system, in accordance with the present disclosure.
Fig. 25 is a diagram illustrating an example implementation of code and circuitry for an apparatus, in accordance with the present disclosure.
Fig. 26 is a diagram of an example apparatus for wireless communication, in accordance with the present disclosure.
Fig. 27 is a diagram illustrating an example of a hardware implementation for an apparatus employing a processing system, in accordance with the present disclosure.
Fig. 28 is a diagram illustrating an example implementation of code and circuitry for an apparatus, in accordance with the present disclosure.
Fig. 29 is a diagram illustrating an example of a disaggregated base station architecture, in accordance with the present disclosure.
Figs. 30-32 are diagrams illustrating example processes associated with performing measurements for NTNs, in accordance with the present disclosure.

### DETAILED DESCRIPTION

In a non-terrestrial network (NTN), a UE may communicate with a serving node (e.g., a base station) via a satellite. The satellite may relay downlink communications from the serving node to the UE, and the satellite may relay uplink communications from the UE to the serving node.

The UE may receive reference signals from the serving node and from a neighbor node, which may initially not communicate data with the UE. The UE may perform measurements of the reference signals, and the UE may transmit a measurement report to the serving node, where the measurement report may indicate the measurements of the reference signals. Depending on the measurement report, the UE may establish a connection to the neighbor node and terminate a connection to the serving node.

In one or more examples, in the NTN, a fixed measurement period/cycle may result in situations in which the measurement period/cycle is relatively long. When the UE measures the reference signals from the serving node and/or the neighbor node, a satellite type or deployment (e.g., Quasi-Earth fixed cell deployment or Earth moving cell deployment) may change from the perspective of the UE. One measurement period/cycle that is well suited for one type of deployment may not be as well suited for another type of deployment. UE may be configured with measurement parameters for one type of deployment, which may cause the UE to measure reference resources more frequently than needed when applied after the type of deployment is switched to another type of deployment. The UE may waste resources measuring the reference resources in this situation.

In one or more examples, in the NTN, the UE may be configured with multiple synchronization signal block (SSB) measurement timing configurations (SMTCs) having different offsets on one measurement frequency. During measurement gaps, measurements are to be performed on SSBs of neighbor cells, and a network may provide a timing of neighbor cell SSBs using SMTCs. The UE may identify and measure SSBs of the neighbor nodes during the measurement gaps, which may be configured using the multiple SMTCs. The UE may not be configured to handle the multiple SMTCs on the one measurement frequency when allocating cell search resources.

In one or more examples, in the NTN, the serving node may be unable to properly configure measurement gaps for individual UEs, due to the relatively large size of an NTN cell and an unknown UE position with respect to the serving node. In one or more examples, the serving node may configure measurement gaps that do not accommodate SMTCs configured for the UE and/or measurement gaps having a relatively long duration or a relatively short periodicity, which may reduce available downlink resources because an increased amount of resources are being used to perform measurements.

In various aspects of techniques and apparatuses described herein, a UE may determine a scaling factor for a UE measurement period based at least in part on the UE being associated with an NTN. The scaling factor may adjust a time duration of the UE measurement period. "UE measurement period" may refer to a time period during which the UE may perform measurements of reference signals. The UE may determine the scaling factor based at least in part on an altitude of a satellite associated with the NTN, an elevation angle of the satellite with respect to the UE, and/or a radius of a beam footprint associated with a measurement cell. The measurement cell may be associated with a neighbor node for which the UE measures a reference signal. The UE may apply the scaling factor to the UE measurement period to obtain a scaled UE measurement period. The scaled UE measurement period may be a UE measurement period with a scaled time duration (e.g., a larger time duration or a smaller time duration) as compared to a time duration of a UE measurement period associated with a terrestrial network. The UE may perform a UE measurement during the scaled UE measurement period. As a result, depending on various factors (e.g., the altitude of the satellite, the elevation angle of the satellite, and/or the radius of the beam footprint), the UE may determine the scaled UE measurement period, which may optimize a usage of resources at the UE for performing measurements. The UE, when using the scaled UE measurement period, may not waste resources performing measurements more often than needed for the type of deployment.

In some aspects, a UE may receive, from a serving node associated with an NTN, a configuration that indicates multiple SMTCs for a measurement frequency. "Measurement frequency" may refer to a frequency on which the UE receives a reference signal and performs a measurement of the reference signal. In some aspects, the UE may split the measurement frequency into multiple measurement frequencies with each measurement frequency being associated with a different SMTC from the multiple SMTCs for the measurement frequency. The measurement frequency may be treated as multiple independent measurement frequencies in terms of a measurement period/interval. The UE may perform cell search functions using a cell search engine that is shared among the multiple measurement frequencies. The cell search engine may be an entity responsible for performing cell search functions, and the UE may be configured with multiple cell search engines. A cell search function performed by a cell search engine may involve performing, as an example, a cell-ID and/or SSB-ID detection and an SSB-based reference signal received power (RSRP) measurement. The configuration received from the serving node may enable the UE to handle a measurement frequency that is configured with multiple SMTCs with different offset values with respect to performing the cell search functions using the measurement frequency configured with the multiple SMTCs, which may allow the UE to avoid wasting resources when performing measurements during UE measurement periods or cycles when the multiple SMTCs are present.

In some aspects, a UE may receive, from a serving node associated with a serving cell in an NTN, a measurement configuration that indicates multiple candidate measurement gaps. The UE may select a set of measurement gaps from the multiple candidate measurement gaps indicated in the measurement configuration based at least in part on one or more characteristics of the serving cell or the UE. For example, the UE may select the set of measurement gaps based at least in part on ephemeris information associated with the serving cell, time-drift information associated with the serving cell, UE position, SMTC parameters configured for the UE, a quantity of SMTCs that are able to be accommodated in measurement gaps, candidate measurement gap parameters, a relative time offset between the serving cell and neighbor cells, an amount of time for which the set of measurement gaps is valid, and/or a loss of downlink resources due to measurement gaps. The UE may transmit, to the serving node, an indication of the set of measurement gaps and the amount of time for which the set of measurement gaps is valid. As a result, the UE may use measurement gaps that are relatively well suited for the UE, which may increase an amount of available downlink resources for the UE. The measurement gaps may be tailored to the UE based at least in part on the ephemeris information, the time-drift information, the UE position, etc., which may allow the UE to avoid performing excessive measurements, thereby leaving more downlink resources available.

In some aspects, the serving node may be configured in a distributed radio access network (D-RAN), an open radio access network (O-RAN), or a virtual radio access network (V-RAN). The serving node may incorporate a centralized unit (CU), one or more distributed units (DUs), and one or more radio units (RUs). The CU may be disaggregated into a CU user plane (CU-UP) and a CU control plane (CU-CP), both of which may connect to the DU over an F1-U interface and an F1-C interface, respectively. The serving node may be deployed as a monolithic unit at a cell site, in which case the CU, the DU, and the RU may all be deployed at the cell site. Alternatively, the serving node may be geographically or virtually split between the CU, the DU, and the RU. In this case, the CU, the DU, and the RU may be deployed at different locations.

Aspects described herein may be applied to a moving cell deployment when cell mobility information with respect to the UE may be made known to the UE, such as in an NTN. The NTN may utilize one or more satellites or drones. The NTN may be based at least in part on a balloon type network or an unmanned aircraft network.

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. One skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

While aspects may be described herein using terminology commonly associated with a 5G or New Radio (NR) radio access technology (RAT), aspects of the present disclosure can be applied to other RATs, such as a 3G RAT, a 4G RAT, and/or a RAT subsequent to 5G (e.g., 6G).

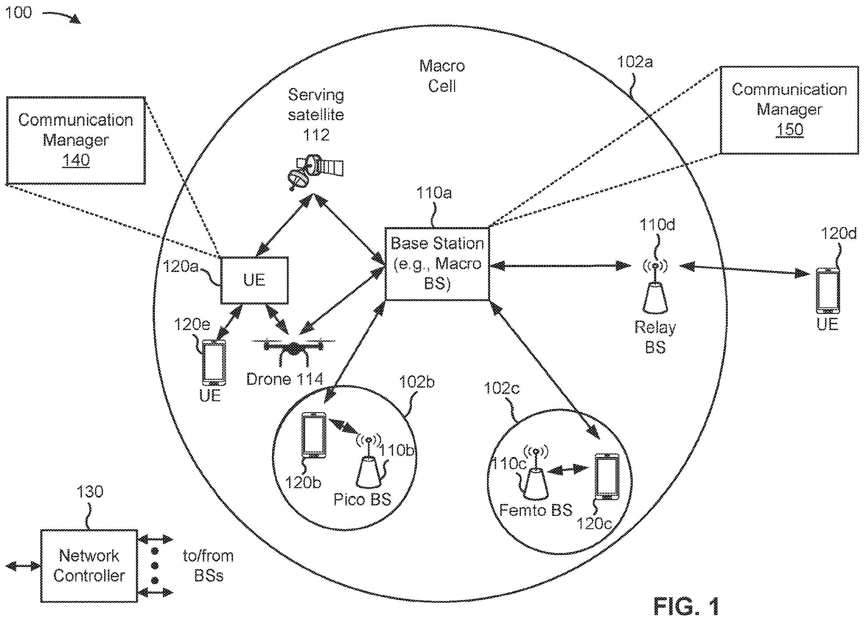

Fig. 1 is a diagram illustrating an example of a wireless network 100, in accordance with the present disclosure. The wireless network 100 may be or may include elements of a 5G (e.g., NR) network and/or a 4G (e.g., Long Term Evolution (LTE)) network, among other examples. The wireless network 100 may include one or more base stations 110 (shown as a BS 110a, a BS 110b, a BS 110c, and a BS 110d), a user equipment (UE) 120 or multiple UEs 120 (shown as a UE 120a, a UE 120b, a UE 120c, a UE 120d, and a UE 120e), and/or other network entities. A base station 110 is an entity that communicates with UEs 120. A base station 110 (sometimes referred to as a BS) may include, for example, an NR base station, an LTE base station, a Node B, an eNB (e.g., in 4G), a gNB (e.g., in 5G), an access point, and/or a transmission reception point (TRP). Each base station 110 may provide communication coverage for a particular geographic area. In the Third Generation Partnership Project (3GPP), the term "cell" can refer to a coverage area of a base station 110 and/or a base station subsystem serving this coverage area, depending on the context in which the term is used.

A base station 110 may provide communication coverage for a macro cell, a pico cell, a femto cell, and/or another type of cell. A macro cell may cover a relatively large geographic area (e.g., several kilometers in radius) and may allow unrestricted access by UEs 120 with service subscriptions. A pico cell may cover a relatively small geographic area and may allow unrestricted access by UEs 120 with service subscription. A femto cell may cover a relatively small geographic area (e.g., a home) and may allow restricted access by UEs 120 having association with the femto cell (e.g., UEs 120 in a closed subscriber group (CSG)). A base station 110 for a macro cell may be referred to as a macro base station. A base station 110 for a pico cell may be referred to as a pico base station. A base station 110 for a femto cell may be referred to as a femto base station or an in-home base station. In the example shown in Fig. 1, the BS 110a may be a macro base station for a macro cell 102a, the BS 110b may be a pico base station for a pico cell 102b, and the BS 110c may be a femto base station for a femto cell 102c. A base station may support one or multiple (e.g., three) cells.

In some aspects, the terms "base station" (e.g., the base station 110) or "network node" may refer to an aggregated base station, a disaggregated base station, an integrated access and backhaul (IAB) node, a relay node, and/or one or more components thereof. For example, in some aspects, "base station" or "network node" may refer to a central unit (CU), a distributed unit (DU), a radio unit (RU), a Near-Real Time (Near-RT) RAN Intelligent Controller (RIC), or a Non-Real Time (Non-RT) RIC, or a combination thereof. In some aspects, the terms "base station" or "network node" may refer to one device configured to perform one or more functions, such as those described herein in connection with the base station 110. In some aspects, the terms "base station" or "network node" may refer to a plurality of devices configured to perform the one or more functions. For example, in some distributed systems, each of a number of different devices (which may be located in the same geographic location or in different geographic locations) may be configured to perform at least a portion of a function, or to duplicate performance of at least a portion of the function, and the terms "base station" or "network node" may refer to any one or more of those different devices. In some aspects, the terms "base station" or "network node" may refer to one or more virtual base stations and/or one or more virtual base station functions. For example, in some aspects, two or more base station functions may be instantiated on a single device. In some aspects, the terms "base station" or "network node" may refer to one of the base station functions and not another. In this way, a single device may include more than one base station.

In some examples, a cell may not necessarily be stationary, and the geographic area of the cell may move according to the location of a base station 110 that is mobile (e.g., a mobile base station). In some examples, the base stations 110 may be interconnected to one another and/or to one or more other base stations 110 or network nodes (not shown) in the wireless network 100 through various types of backhaul interfaces, such as a direct physical connection or a virtual network, using any suitable transport network.

The wireless network 100 may include one or more relay stations. A relay station is an entity that can receive a transmission of data from an upstream station (e.g., a base station 110 or a UE 120) and send a transmission of the data to a downstream station (e.g., a UE 120 or a base station 110). A relay station may be a UE 120 that can relay transmissions for other UEs 120. In the example shown in Fig. 1, the BS 110d (e.g., a relay base station) may communicate with the BS 110a (e.g., a macro base station) and the UE 120d in order to facilitate communication between the BS 110a and the UE 120d. A base station 110 that relays communications may be referred to as a relay station, a relay base station, a relay, or the like.

The wireless network 100 may be a heterogeneous network that includes base stations 110 of different types, such as macro base stations, pico base stations, femto base stations, relay base stations, or the like. These different types of base stations 110 may have different transmit power levels, different coverage areas, and/or different impacts on interference in the wireless network 100. For example, macro base stations may have a high transmit power level (e.g., 5 to 40 watts) whereas pico base stations, femto base stations, and relay base stations may have lower transmit power levels (e.g., 0.1 to 2 watts).

A network controller 130 may couple to or communicate with a set of base stations 110 and may provide coordination and control for these base stations 110. The network controller 130 may communicate with the base stations 110 via a backhaul communication link. The base stations 110 may communicate with one another directly or indirectly via a wireless or wireline backhaul communication link.

The UEs 120 may be dispersed throughout the wireless network 100, and each UE 120 may be stationary or mobile. A UE 120 may include, for example, an access terminal, a terminal, a mobile station, and/or a subscriber unit. A UE 120 may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device, a biometric device, a wearable device (e.g., a smart watch, smart clothing, smart glasses, a smart wristband, smart jewelry (e.g., a smart ring or a smart bracelet)), an entertainment device (e.g., a music device, a video device, and/or a satellite radio), a vehicular component or sensor, a smart meter/sensor, industrial manufacturing equipment, a global positioning system device, and/or any other suitable device that is configured to communicate via a wireless or wired medium.

Some UEs 120 may be considered machine-type communication (MTC) or evolved or enhanced machine-type communication (eMTC) UEs. An MTC UE and/or an eMTC UE may include, for example, a robot, a drone, a remote device, a sensor, a meter, a monitor, and/or a location tag, that may communicate with a base station, another device (e.g., a remote device), or some other entity. Some UEs 120 may be considered Internet-of-Things (IoT) devices, and/or may be implemented as NB-IoT (narrowband IoT) devices. Some UEs 120 may be considered a Customer Premises Equipment. A UE 120 may be included inside a housing that houses components of the UE 120, such as processor components and/or memory components. In some examples, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks 100 may be deployed in a given geographic area. Each wireless network 100 may support a particular RAT and may operate on one or more frequencies. A RAT may be referred to as a radio technology, an air interface, or the like. A frequency may be referred to as a carrier, a frequency channel, or the like. Each frequency may support a single RAT in a given geographic area in order to avoid interference between wireless networks of different RATs. In some cases, NR or 5G RAT networks may be deployed.

In some examples, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, or a vehicle-to-pedestrian (V2P) protocol), and/or a mesh network. In such examples, a UE 120 may perform scheduling operations, resource selection operations, and/or other operations described elsewhere herein as being performed by the base station 110.

The electromagnetic spectrum is often subdivided, by frequency/wavelength, into various classes, bands, channels, etc. In 5G NR, two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above examples in mind, unless specifically stated otherwise, it should be understood that the term "sub-6 GHz" or the like, if used herein, may broadly represent frequencies that may be less than 6 GHz, may be within FR1, or may include mid-band frequencies. Further, unless specifically stated otherwise, it should be understood that the term "millimeter wave" or the like, if used herein, may broadly represent frequencies that may include mid-band frequencies, may be within FR2, FR4, FR4-a or FR4-1, and/or FR5, or may be within the EHF band. It is contemplated that the frequencies included in these operating bands (e.g., FR1, FR2, FR3, FR4, FR4-a, FR4-1, and/or FR5) may be modified, and techniques described herein are applicable to those modified frequency ranges.

In some aspects, a UE (e.g., UE 120) may include a communication manager 140. As described in more detail elsewhere herein, the communication manager 140 may determine a scaling factor for a UE measurement period based at least in part on the UE being associated with an NTN; and perform a measurement during a scaled UE measurement period based at least in part on the scaling factor and the UE measurement period. Additionally, or alternatively, the communication manager 140 may perform one or more other operations described herein.

In some aspects, a UE (e.g., UE 120) may include a communication manager 140. As described in more detail elsewhere herein, the communication manager 140 may receive, from a serving node associated with an NTN, a configuration that indicates multiple SMTCs for a measurement frequency; and perform cell search functions using a cell search engine that is shared among multiple measurement frequencies, wherein the multiple measurement frequencies are based at least in part on the measurement frequency, and each measurement frequency of the multiple measurement frequencies is associated with a different SMTC from the multiple SMTCs for the measurement frequency. Additionally, or alternatively, the communication manager 140 may perform one or more other operations described herein.

In some aspects, a UE (e.g., UE 120) may include a communication manager 140. As described in more detail elsewhere herein, the communication manager 140 may receive, from a serving node in an NTN, a measurement configuration that indicates multiple candidate measurement gaps; and transmit, to the serving node, an indication of one or more measurement gaps and a time duration for which the one or more measurement gaps are valid at the UE, the one or more measurement gaps being selected from the multiple candidate measurement gaps indicated in the measurement configuration based at least in part on one or more characteristics of the serving node or the UE. Additionally, or alternatively, the communication manager 140 may perform one or more other operations described herein.

In some aspects, a serving node (e.g., base station 110) may include a communication manager 150. As described in more detail elsewhere herein, the communication manager 150 may output, from the serving node in an NTN, a measurement configuration that indicates multiple candidate measurement gaps; and obtain an indication of one or more measurement gaps selected from the multiple candidate measurement gaps indicated in the measurement configuration and a time duration for which the set of measurement gaps are valid at the UE. Additionally, or alternatively, the communication manager 150 may perform one or more other operations described herein.

As indicated above, Fig. 1 is provided as an example. Other examples may differ from what is described with regard to Fig. 1.

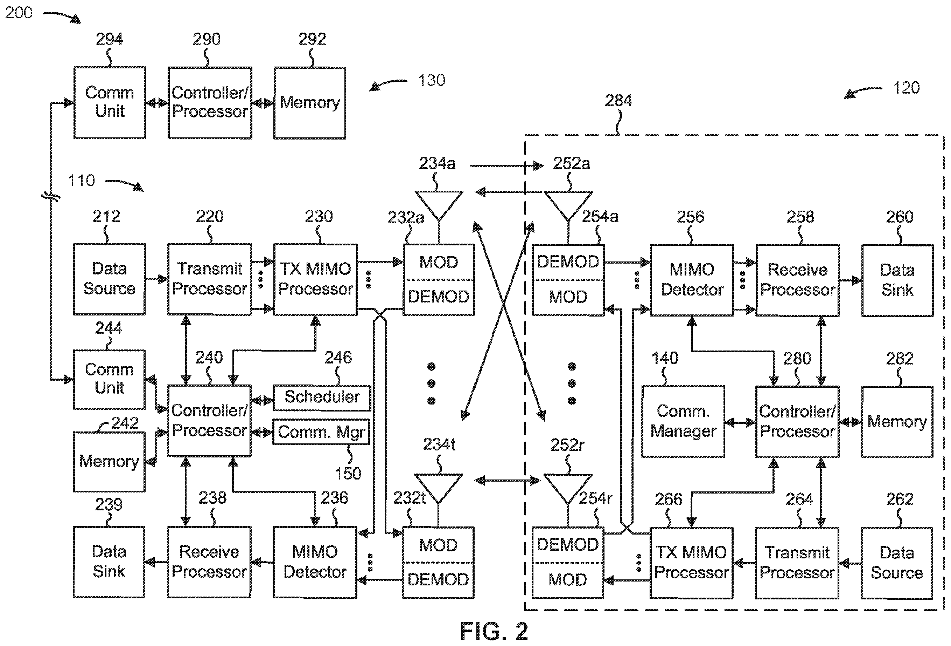

Fig. 2 is a diagram illustrating an example 200 of a base station 110 in communication with a UE 120 in a wireless network 100, in accordance with the present disclosure. The base station 110 may be equipped with a set of antennas 234a through 234t, such as *T* antennas (*T* ≥ 1). The UE 120 may be equipped with a set of antennas 252a through 252r, such as *R* antennas (*R* ≥ 1).

At the base station 110, a transmit processor 220 may receive data, from a data source 212, intended for the UE 120 (or a set of UEs 120). The transmit processor 220 may select one or more modulation and coding schemes (MCSs) for the UE 120 based at least in part on one or more channel quality indicators (CQIs) received from that UE 120. The base station 110 may process (e.g., encode and modulate) the data for the UE 120 based at least in part on the MCS(s) selected for the UE 120 and may provide data symbols for the UE 120. The transmit processor 220 may process system information (e.g., for semi-static resource partitioning information (SRPI)) and control information (e.g., CQI requests, grants, and/or upper layer signaling) and provide overhead symbols and control symbols. The transmit processor 220 may generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide a set of output symbol streams (e.g., *T* output symbol streams) to a corresponding set of modems 232 (e.g., *T* modems), shown as modems 232a through 232t. For example, each output symbol stream may be provided to a modulator component (shown as MOD) of a modem 232. Each modem 232 may use a respective modulator component to process a respective output symbol stream (e.g., for OFDM) to obtain an output sample stream. Each modem 232 may further use a respective modulator component to process (e.g., convert to analog, amplify, filter, and/or upconvert) the output sample stream to obtain a downlink signal. The modems 232a through 232t may transmit a set of downlink signals (e.g., *T* downlink signals) via a corresponding set of antennas 234 (e.g., *T* antennas), shown as antennas 234a through 234t.

At the UE 120, a set of antennas 252 (shown as antennas 252a through 252r) may receive the downlink signals from the base station 110 and/or other base stations 110 and may provide a set of received signals (e.g., *R* received signals) to a set of modems 254 (e.g., *R* modems), shown as modems 254a through 254r. For example, each received signal may be provided to a demodulator component (shown as DEMOD) of a modem 254. Each modem 254 may use a respective demodulator component to condition (e.g., filter, amplify, downconvert, and/or digitize) a received signal to obtain input samples. Each modem 254 may use a demodulator component to further process the input samples (e.g., for OFDM) to obtain received symbols. A MIMO detector 256 may obtain received symbols from the modems 254, may perform MIMO detection on the received symbols if applicable, and may provide detected symbols. A receive (RX) processor 258 may process (e.g., demodulate and decode) the detected symbols, may provide decoded data for the UE 120 to a data sink 260, and may provide decoded control information and system information to a controller/processor 280. The term "controller/processor" may refer to one or more controllers, one or more processors, or a combination thereof. A channel processor may determine an RSRP parameter, a received signal strength indicator (RSSI) parameter, a reference signal received quality (RSRQ) parameter, and/or a CQI parameter, among other examples. In some examples, one or more components of the UE 120 may be included in a housing 284.

The network controller 130 may include a communication unit 294, a controller/processor 290, and a memory 292. The network controller 130 may include, for example, one or more devices in a core network. The network controller 130 may communicate with the base station 110 via the communication unit 294.

One or more antennas (e.g., antennas 234a through 234t and/or antennas 252a through 252r) may include, or may be included within, one or more antenna panels, one or more antenna groups, one or more sets of antenna elements, and/or one or more antenna arrays, among other examples. An antenna panel, an antenna group, a set of antenna elements, and/or an antenna array may include one or more antenna elements (within a single housing or multiple housings), a set of coplanar antenna elements, a set of non-coplanar antenna elements, and/or one or more antenna elements coupled to one or more transmission and/or reception components, such as one or more components of Fig. 2.

On the uplink, at the UE 120, a transmit processor 264 may receive and process data from a data source 262 and control information (e.g., for reports that include RSRP, RSSI, RSRQ, and/or CQI) from the controller/processor 280. The transmit processor 264 may generate reference symbols for one or more reference signals. The symbols from the transmit processor 264 may be precoded by a TX MIMO processor 266 if applicable, further processed by the modems 254 (e.g., for DFT-s-OFDM or CP-OFDM), and transmitted to the base station 110. In some examples, the modem 254 of the UE 120 may include a modulator and a demodulator. In some examples, the UE 120 includes a transceiver. The transceiver may include any combination of the antenna(s) 252, the modem(s) 254, the MIMO detector 256, the receive processor 258, the transmit processor 264, and/or the TX MIMO processor 266. The transceiver may be used by a processor (e.g., the controller/processor 280) and the memory 282 to perform aspects of any of the methods described herein.

At the base station 110, the uplink signals from UE 120 and/or other UEs may be received by the antennas 234, processed by the modem 232 (e.g., a demodulator component, shown as DEMOD, of the modem 232), detected by a MIMO detector 236 if applicable, and further processed by a receive processor 238 to obtain decoded data and control information sent by the UE 120. The receive processor 238 may provide the decoded data to a data sink 239 and provide the decoded control information to the controller/processor 240. The base station 110 may include a communication unit 244 and may communicate with the network controller 130 via the communication unit 244. The base station 110 may include a scheduler 246 to schedule one or more UEs 120 for downlink and/or uplink communications. In some examples, the modem 232 of the base station 110 may include a modulator and a demodulator. In some examples, the base station 110 includes a transceiver. The transceiver may include any combination of the antenna(s) 234, the modem(s) 232, the MIMO detector 236, the receive processor 238, the transmit processor 220, and/or the TX MIMO processor 230. The transceiver may be used by a processor (e.g., the controller/processor 240) and the memory 242 to perform aspects of any of the methods described herein.

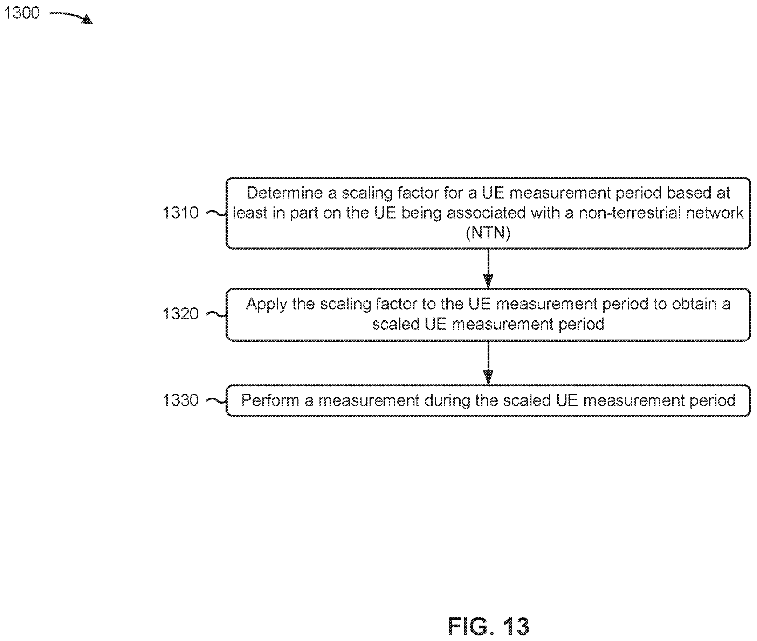

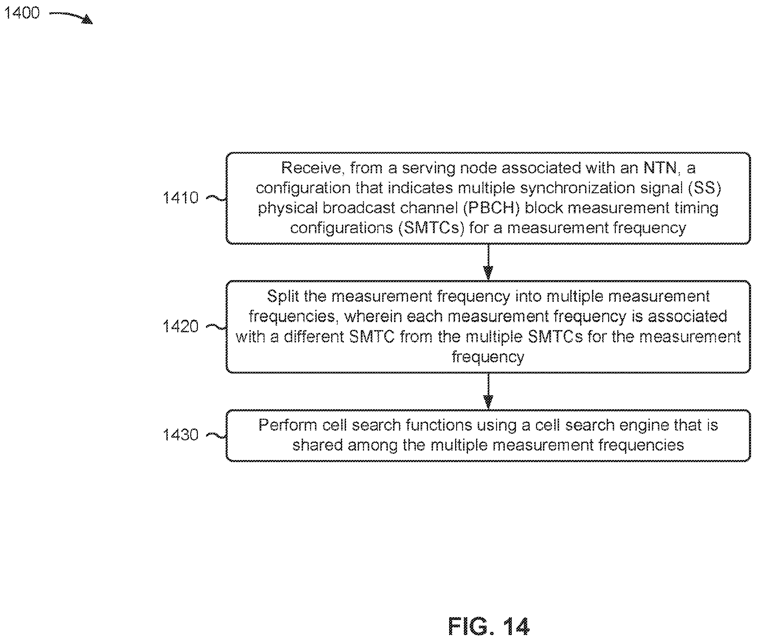

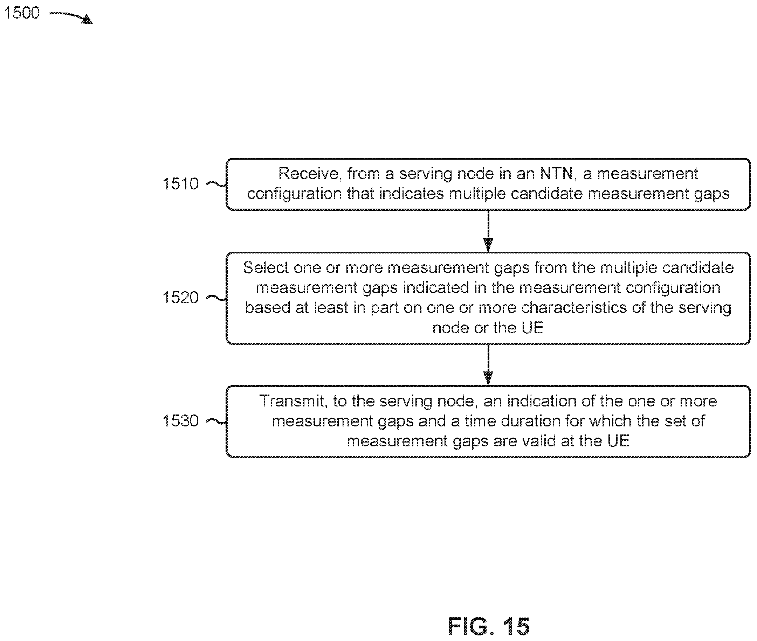

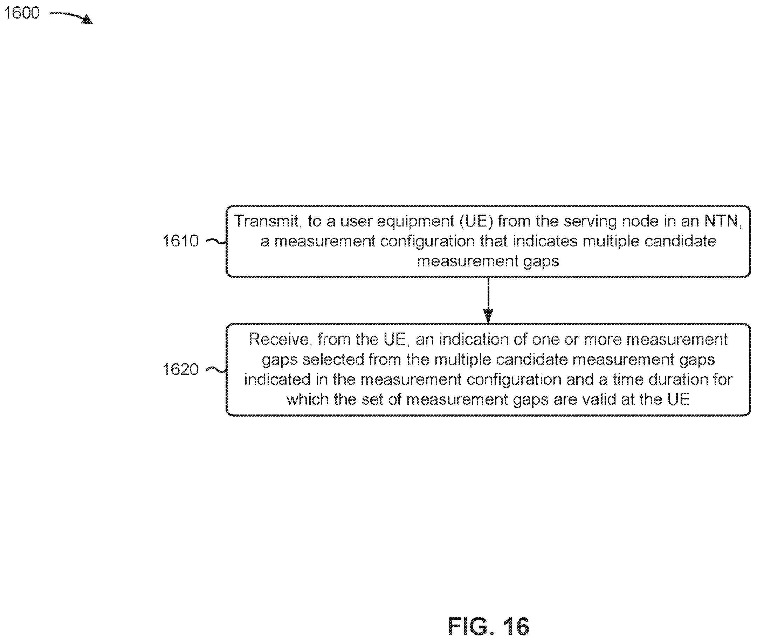

The controller/processor 240 of the base station 110, the controller/processor 280 of the UE 120, and/or any other component(s) of Fig. 2 may perform one or more techniques associated with performing measurements for NTNs, as described in more detail elsewhere herein. In some aspects, the serving node described herein is the base station 110, is included in the base station 110, or includes one or more components of the base station 110 shown in Fig. 2. For example, the controller/processor 240 of the base station 110, the controller/processor 280 of the UE 120, and/or any other component(s) of Fig. 2 may perform or direct operations of, for example, process 1300 of Fig. 13, process 1400 of Fig. 14, process 1500 of Fig. 15, process 1600 of Fig. 16, and/or other processes as described herein. The memory 242 and the memory 282 may store data and program codes for the base station 110 and the UE 120, respectively. In some examples, the memory 242 and/or the memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 1300 of Fig. 13, process 1400 of Fig. 14, process 1500 of Fig. 15, process 1600 of Fig. 16, and/or other processes as described herein. In some examples, executing instructions may include running the instructions, converting the instructions, compiling the instructions, and/or interpreting the instructions, among other examples.

In some aspects, a UE (e.g., UE 120) includes means for determining a scaling factor for a UE measurement period based at least in part on the UE being associated with an NTN; and/or means for performing a measurement during a scaled UE measurement period based at least in part on the scaling factor and the UE measurement period. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a UE (e.g., UE 120) includes means for receiving, from a serving node associated with an NTN, a configuration that indicates multiple SMTCs for a measurement frequency; and/or means for performing cell search functions using a cell search engine that is shared among multiple measurement frequencies, wherein the multiple measurement frequencies are based at least in part on the measurement frequency, and each measurement frequency of the multiple measurement frequencies is associated with a different SMTC from the multiple SMTCs for the measurement frequency. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a UE (e.g., UE 120) includes means for receiving, from a serving node in an NTN, a measurement configuration that indicates multiple candidate measurement gaps; and/or means for transmitting, to the serving node, an indication of one or more measurement gaps and a time duration for which the set of measurement gaps are valid at the UE, the one or more measurement gaps being selected from the multiple candidate measurement gaps indicated in the measurement configuration based at least in part on one or more characteristics of the serving node or the UE. The means for the UE to perform operations described herein may include, for example, one or more of communication manager 140, antenna 252, modem 254, MIMO detector 256, receive processor 258, transmit processor 264, TX MIMO processor 266, controller/processor 280, or memory 282.

In some aspects, a serving node (e.g., base station 110) includes means for outputting, from the serving node in an NTN, a measurement configuration that indicates multiple candidate measurement gaps; and/or means for obtaining an indication of one or more measurement gaps selected from the multiple candidate measurement gaps indicated in the measurement configuration and a time duration for which the set of measurement gaps are valid at a UE. In some aspects, the means for the serving node to perform operations described herein may include, for example, one or more of communication manager 150, transmit processor 220, TX MIMO processor 230, modem 232, antenna 234, MIMO detector 236, receive processor 238, controller/processor 240, memory 242, or scheduler 246.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of the controller/processor 280.

As indicated above, Fig. 2 is provided as an example. Other examples may differ from what is described with regard to Fig. 2.

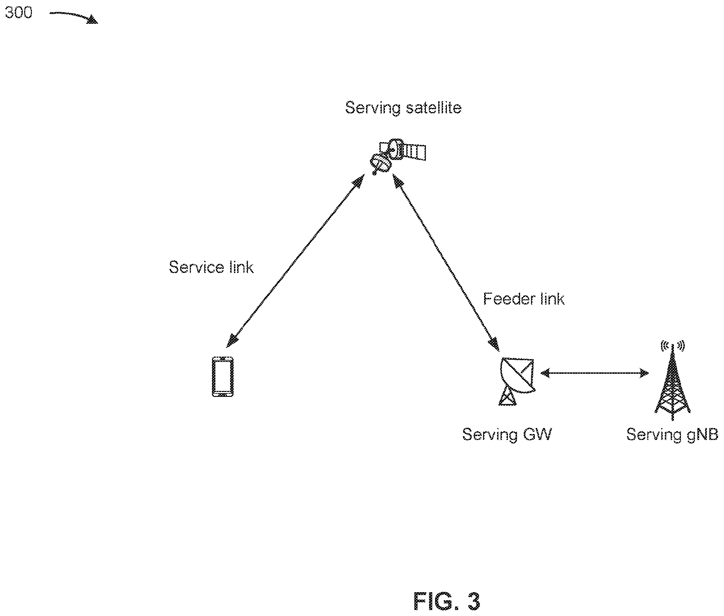

Fig. 3 is a diagram illustrating an example 300 of a non-terrestrial network (NTN), in accordance with the present disclosure.

As shown in Fig. 3, a UE may communicate with a serving gNB via a serving satellite in the NTN. The UE may transmit an uplink transmission to the serving satellite. The serving satellite may relay the uplink transmission to the serving gNB via a serving gateway. The serving gNB may transmit a downlink transmission to the serving satellite via the serving gateway. The serving satellite may relay the downlink transmission to the UE. A link between the UE and the serving satellite may be a service link, and a link between the serving satellite and the serving gateway may be feeder link.

As indicated above, Fig. 3 is provided as an example. Other examples may differ from what is described with regard to Fig. 3.

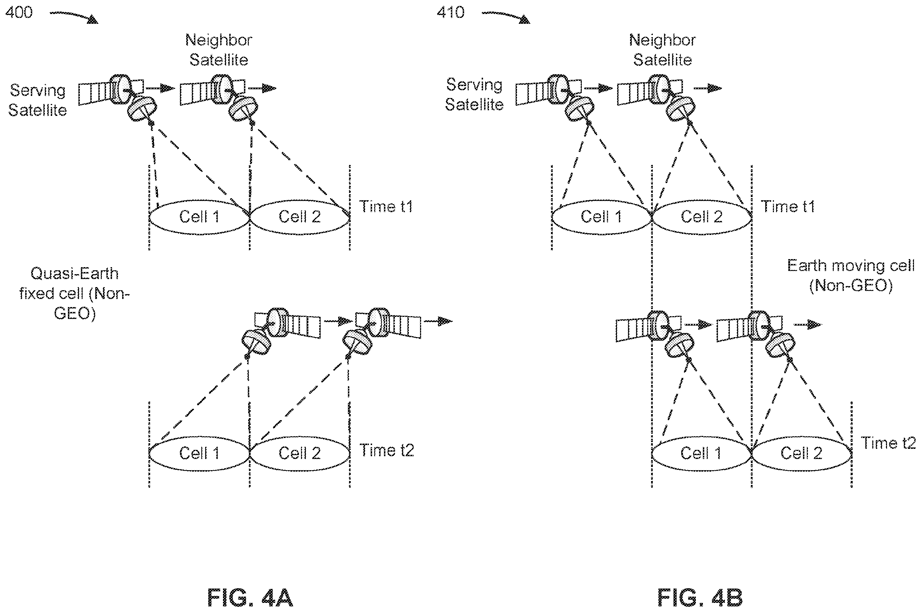

Figs. 4a and 4B are diagrams illustrating examples 400, 410 of cell deployments for non-geostationary satellites, in accordance with the present disclosure.

A UE configured to operate in an NTN may be equipped with a global navigation satellite system (GNSS). The NTN may configure measurement and mobility related parameters for the UE based at least in part on an assumption that the UE is located at a center of a beam footprint (e.g., a center of a cell).

As shown in Fig. 4A, the NTN may employ a quasi-Earth fixed cell deployment for a non-geostationary satellite. For the quasi-Earth fixed cell deployment, a beam footprint (or cell) may be Earth fixed, in which case a beam pointing mechanism may compensate for the mobility of the non-geostationary satellite. In other words, even though the satellite may move over time, the beam footprint may remain fixed on Earth based at least in part on the beam pointing mechanism. The beam footprint, which may be associated with a cell, may not move as the non-geostationary satellite moves over the Earth. The beam pointing mechanism may be associated with a mechanical or electronic steering feature, which may allow the non-geostationary satellite to steer the beam footprint as the non-geostationary satellite moves over the Earth.

As shown in Fig. 4B, the NTN may employ an Earth moving cell deployment for the non-geostationary satellite. For the Earth moving cell deployment, a beam footprint may be moving over the Earth with the non-geostationary satellite motion. The beam footprint may move over the Earth with the non-geostationary satellite.

A relative satellite speed from a UE perspective may be based at least in part on an altitude of the satellite and an elevation angle between the UE and the satellite. The satellite may be a geostationary satellite, or the satellite may be the non-geostationary satellite, such as a low Earth orbit (LEO) satellite or a medium Earth orbit (MEO) satellite. The geostationary satellite may have an altitude that is greater than an altitude of the non-geostationary satellite, so the relative satellite speed of the geostationary satellite may be less than the relative satellite speed of the non-geostationary satellite. As an example, the non-geostationary satellite, such as the LEO satellite, may have an altitude of 600 kilometers (km), whereas the geostationary satellite may have an altitude of 36,000 km.

As indicated above, Figs. 4A and 4B are provided as examples. Other examples may differ from what is described with regard to Figs. 4A and 4B.

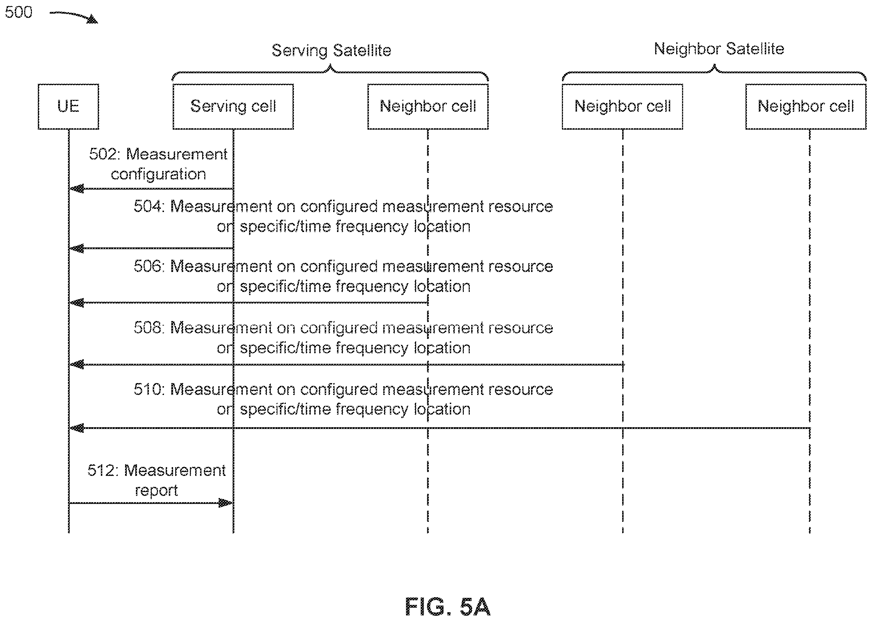

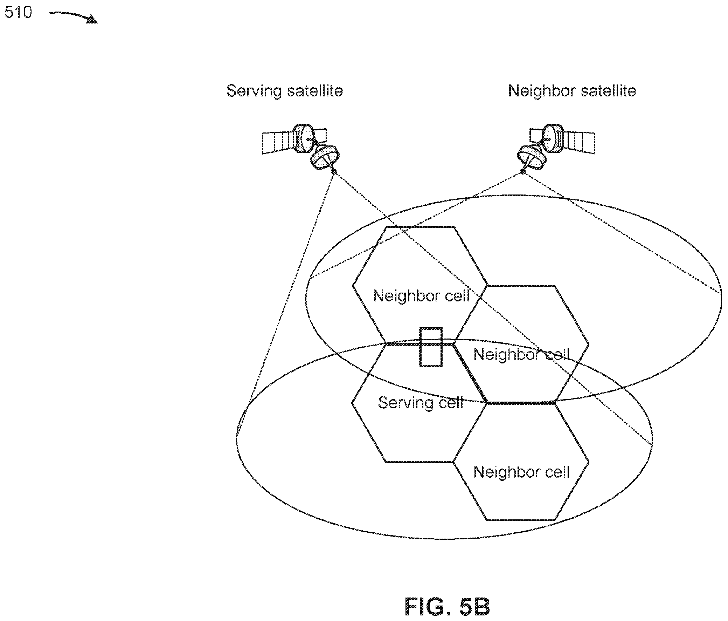

Figs. 5A and 5B are diagrams illustrating examples 500, 510 of a measurement configuration for the NTN, in accordance with the present disclosure.

As shown by reference number 502, a UE may receive, from a serving cell, the measurement configuration. The serving cell may be associated with a serving satellite of the NTN. A measurement configuration may indicate, for a specific measurement object, a target cell frequency, a target cell (e.g., physical cell identifier), and a target reference signal, such as a channel state information reference signal (CSI-RS). The measurement configuration may indicate a report configuration and a measurement gap. As shown by reference number 504, the UE may determine, with respect to the serving cell, a measurement on a configured measurement resource on a specific time/frequency location. As shown by reference number 506, the UE may determine, with respect to a neighbor cell associated with the serving satellite, a measurement on a configured measurement resource on a specific time/frequency location. As shown by reference number 508, the UE may determine, with respect to a neighbor cell associated with a neighbor satellite, a measurement on a configured measurement resource on a specific time/frequency location. As shown by reference number 510, the UE may determine, with respect to another neighbor cell associated with the neighbor satellite, a measurement on a configured measurement resource on a specific time/frequency location. As shown by reference number 512, the UE may transmit, to the serving cell, a measurement report indicating the measurements on the configured measurement resources.

Depending on configured measurement parameters and timing relations from a UE perspective between measurement resources across cells and measurement frequency layers, measurements for certain cells may be associated with measurement gap(s). A cell search engine (or UE processor) may be shared for measurements on different frequency layers than the serving cell. Further, a measurement cycle/period for respective carriers may be properly adjusted.

As shown in Fig. 5B, the serving satellite may be associated with a serving cell and a neighbor cell. A UE may be located within the serving cell or the neighbor cell associated with the serving satellite. The neighbor satellite may be associated with one or more neighbor cells.

As indicated above, Figs. 5A and 5B are provided as examples. Other examples may differ from what is described with regard to Figs. 5A and 5B.

In an NTN, depending on a satellite type or deployment, a constant measurement period (or a fixed measurement period) at a given set of parameters defined for a terrestrial network deployment may be unsuitable when used for the NTN. The set of parameters may include a discontinuous reception (DRX) cycle, an SMTC period, and other legacy scaling factors defined for the terrestrial network deployment. A UE measurement period/cycle may be relatively long compared to a cell deployment change. For example, while the UE measures reference signals from serving or neighbor cells/satellites, a UE perceived cell deployment may change. As a result, the UE may be configured with measurement parameters which effectively force the UE to measure reference resources more frequently than necessary, which may waste resources at the UE.

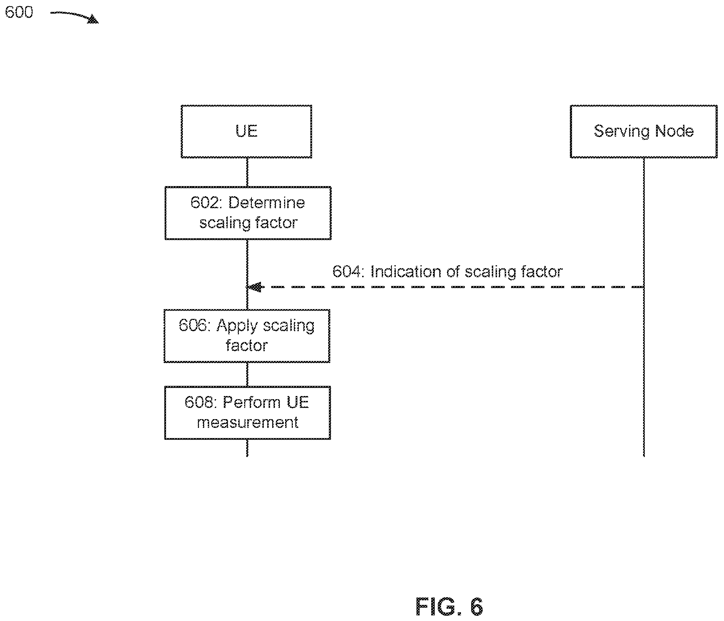

Fig. 6 is a diagram illustrating an example 600 associated with performing measurements for NTNs, in accordance with the present disclosure. As shown in Fig. 6, example 600 includes communication between a UE (e.g., UE 120) and a serving node (e.g., base station 110) via a satellite (e.g., serving satellite 112) or a drone 114. In some aspects, the UE and the serving node may be included in a wireless network, such as wireless network 100.

As shown by reference number 602, the UE may determine a scaling factor for a UE measurement period based at least in part on the UE being associated with an NTN. In some aspects, the UE may determine the scaling factor based at least in part on an altitude of a satellite associated with the NTN, an elevation angle of the satellite with respect to the UE, and/or a radius of a beam footprint associated with a measurement cell. The scaling factor may adjust a length of the UE measurement period, thereby resulting in an adaptive UE measurement period.

As shown by reference number 604, the UE may receive, from the serving node associated with the NTN, an indication of the scaling factor for the UE measurement period. A value of the scaling factor may be signaled by the NTN. The UE may receive the indication via a UE-specific signal, a UE group-specific signal, or a satellite-specific signal. The UE may determine the scaling factor for the UE measurement period based at least in part on the indication received from the serving node. The UE group-specific signal may be a group (of UEs) specific signal, where the group may be determined based at least in part on a distance from a reference point which may be used as a virtual UE position when the NTN configures measurement or handover related parameters.

As shown by reference number 606, the UE may apply the scaling factor to the UE measurement period to obtain a scaled UE measurement period. The UE may scale down or shorten the UE measurement period, based at least in part on the scaling factor, to obtain the scaled UE measurement period. The scaled UE measurement period may be shorter than the UE measurement period. The UE may adaptively scale the UE measurement period (cycle/interval) according to the scaling factor.

In some aspects, the UE may determine to apply the scaling factor to the UE measurement period based at least in part on a satellite type of a measurement cell. The satellite type of the measurement cell may be a non-geostationary satellite with an Earth moving cell deployment, in which case the UE may determine to apply the scaling factor to the UE measurement period. In some aspects, the UE may determine that the scaling factor is to not be applied to the UE measurement period based at least in part on the measurement cell being associated with a terrestrial network, the satellite type of the measurement cell being a geostationary satellite, or the satellite type of the measurement cell being a non-geostationary satellite with a quasi-Earth fixed cell deployment.

In some aspects, the UE may determine whether or not to apply the scaling factor based at least in part on the satellite type of the measurement cell, such as the terrestrial network or the geostationary satellite versus the non-geostationary satellite. The non-geostationary satellite type may be associated with the quasi-Earth fixed cell deployment or the Earth moving cell deployment. In some aspects, the UE may activate the scaling factor for measurement cells that are associated with the non-geostationary satellite type with the Earth moving cell deployment. The UE may deactivate the scaling factor for measurement cells that are associated with the terrestrial network, the geostationary satellite, or the non-geostationary satellite with the quasi-Earth fixed cell deployment. When the scaling factor is activated, the value of the scaling factor may be a function of the altitude of the satellite associated with the NTN, the elevation angle of the satellite with respect to the UE, and/or the radius of the beam footprint associated with the measurement cell.

In some aspects, the scaling factor may be applied to a DRX cycle length. The DRX cycle length may include an ON duration and an OFF duration. The scaling factor may be different for different DRX cycle lengths. The value of the scaling factor may be larger than 0 and less than or equal to 1. For example, when the measurement cell belongs to the terrestrial network, the geostationary satellite, or the non-geostationary satellite with the quasi-Earth fixed cell deployment, the scaling factor may be equal to 1. In other situations, the scaling factor may be less than 1, thereby shortening the UE measurement period.

As shown by reference number 608, the UE may perform a measurement during the scaled UE measurement period. The measurement may be associated with an intra-frequency NR cell, an inter-frequency NR cell, a radio link monitoring (RLM) evaluation period, a beam failure detection evaluation period, a candidate beam detection evaluation period, a primary synchronization signal (PSS) detection period, or a secondary synchronization signal (SSS) detection period. In other words, the UE may apply the scaling factor when performing measurements of the intra-frequency NR cell or the inter-frequency NR cell. The UE may apply the scaling factor when performing measurements during the RLM evaluation period, the beam failure detection evaluation period, the candidate beam detection evaluation period, the PSS detection period, and/or the SSS detection period.

As indicated above, Fig. 6 is provided as an example. Other examples may differ from what is described with regard to Fig. 6.

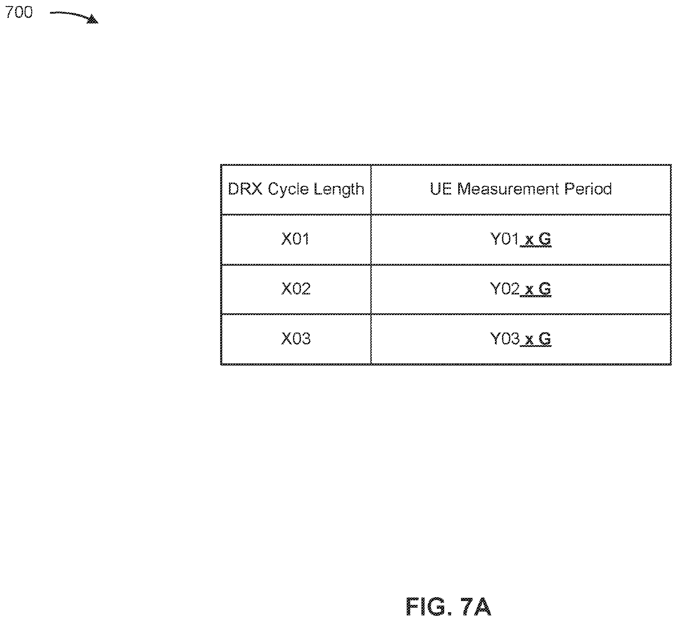

Fig. 7A is a diagram illustrating an example 700 associated with performing measurements using a scaling factor, in accordance with the present disclosure.

As shown in Fig. 7A, the scaling factor (denoted as G) may be applied during UE measurement periods when a UE is performing measurements. The scaling factor may be applied for a particular DRX cycle length (e.g., X01, X02, or X03). The scaling factor may be applied to a value (e.g., Y01, Y02, or Y03) corresponding to the particular DRX cycle length. The scaling factor may adjust (e.g., decrease) a time period associated with the UE measurement period. When the scaling factor is enabled and set to less than one, a UE may perform the measurements more frequently as compared to when the scaling factor is not enabled. By applying different scaling factors, a network may control a UE measurement frequency depending on a target measurement cell's mobility, e.g. the UE may measure LEO cells more often as compared to GEO cells and terrestrial network cells.

As indicated above, Fig. 7A is provided as an example. Other examples may differ from what is described with regard to Fig. 7A.

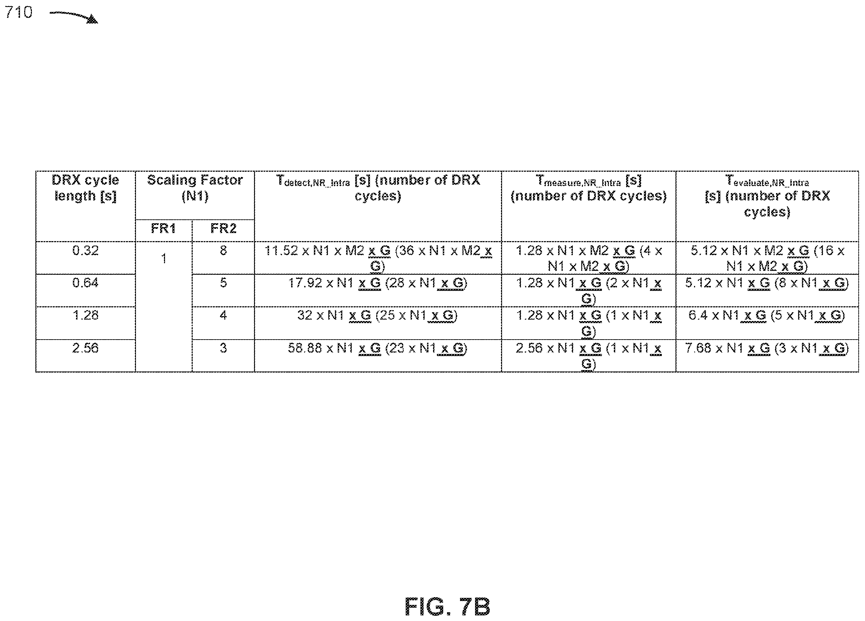

Fig. 7B is a diagram illustrating an example 710 associated with performing intra-frequency NR cell measurements using a scaling factor, in accordance with the present disclosure.

As shown in Fig. 7B, the scaling factor (denoted as G) may be applied during UE measurement periods when a UE is performing the intra-frequency NR cell measurements. The scaling factor G may be different than a scaling factor *N1.* The scaling factor may be applied for a particular DRX cycle length. The scaling factor may be applied to a UE measurement period associated with a detection period (T_{detect,NR_Intra}), which may be associated with a quantity of DRX cycles. The scaling factor may be applied to a UE measurement period associated with a measurement period (T_{measure,NR_Intra}), which may be associated with a quantity of DRX cycles. The scaling factor may be applied to a UE measurement period associated with an evaluation period (T_{evaluate,NR_Intra}), which may be associated with a quantity of DRX cycles. Further, *N1* may be equal to 8 for a plurality of DRX cycle lengths and *M2* (a numerical value) may be equal to 1.5 when an SMTC periodicity of a measured intra-frequency cell is greater than 20 ms, or otherwise *M2* may be equal to 1.

As indicated above, Fig. 7B is provided as an example. Other examples may differ from what is described with regard to Fig. 7B.

In traditional terrestrial network deployments, UE measurement period/cycles may be determined based at least in part on a quantity of measurement frequencies, an SMTC period on respective measurement frequencies, and/or a measurement gap configuration. However, in an NTN, a UE may be configured with multiple SMTCs having different offsets on one measurement frequency, which may result in an ambiguity when defining measurement requirements in terms of a measurement period/cycle/delay. The UE being configured with the multiple SMTCs may also affect a UE allocation of limited resources, such as a cell search engine which may be used by the UE to measure reference signals on multiple measurement frequencies.

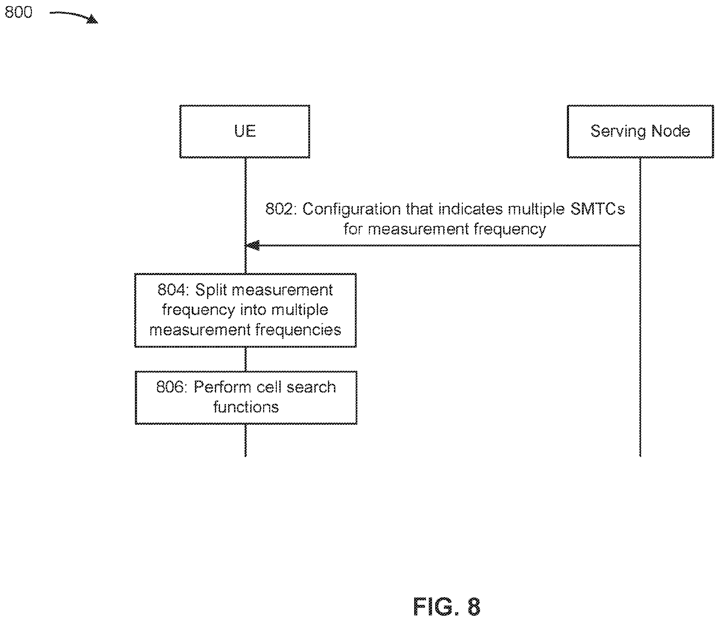

Fig. 8 is a diagram illustrating an example 800 associated with performing measurements for NTNs, in accordance with the present disclosure. As shown in Fig. 8, example 800 includes communication between a UE (e.g., UE 120) and a serving node (e.g., base station 110) via a satellite (e.g., serving satellite 112). In some aspects, the UE and the serving node may be included in a wireless network, such as wireless network 100.

As shown by reference number 802, the UE may receive, from the serving node associated with an NTN, a configuration that indicates multiple SMTCs for a measurement frequency. Each of the multiple SMTCs may be associated with a different SMTC offset value.

As shown by reference number 804, the UE may split the measurement frequency into multiple measurement frequencies with each measurement frequency being associated with a different SMTC from the multiple SMTCs for the measurement frequency. The UE may split the measurement frequency into multiple virtual measurement frequencies, such that virtual measurement frequencies (or carriers) may be supported for the measurement frequency (or a carrier) with the multiple SMTCs.

The multiple measurement frequencies may be independent from each other with respect to a measurement period or interval and with respect to a carrier-specific scaling factor (CSSF). The multiple measurement frequencies may be associated with multiple inter-frequencies.

In some aspects, when the measurement frequency is configured with multiple SMTCs with different offset values, the measurement frequency may be treated as multiple independent measurement frequencies in terms of a measurement period/interval and a CSSF, which may represent a quantity of measurement carriers that share one cell search engine.

As shown by reference number 806, the UE may perform cell search functions using a second cell search engine that is shared among the multiple measurement frequencies. The UE may perform cell search functions using a first cell search engine that is dedicated to a primary cell (PCell) frequency or carrier. In some aspects, the second cell search engine is equally shared between the multiple measurement frequencies. In some aspects, the second cell search engine may be non-equally shared between the multiple measurement frequencies, where a sharing factor between the multiple measurement frequencies may be based at least in part on measurement frequencies associated with one or more satellites different than the serving satellite.

In some aspects, the UE may equipped with the first cell search engine and the second cell search engine, where the first cell search engine may be dedicated to the PCell frequency/carrier, and the second cell search engine may be shared by remaining measurement carriers. The first and second cell search engines may be processors used to detect a cell and/or synchronization signal block identifier (SSB-ID), obtain time/frequency offset/synchronization information based at least in part on the SSB-ID, and/or measure an SSB-RSRP. In some aspects, the second cell search engine may be equally or non-equally shared by the remaining measurement carriers. When the second cell search engine is non-equally shared, the sharing factor may be determined such that measurement carriers belonging to satellites different than a serving cell's satellite may be measured more frequently than measurement carriers belonging to the same satellite as the serving cell, or vice versa.

As indicated above, Fig. 8 is provided as an example. Other examples may differ from what is described with regard to Fig. 8.

In some aspects, a carrier-specific scaling factor (CSSF_{outside_gap,i} scaling factor) may be for an intra-frequency SSB-based measurement, an inter-frequency SSB-based measurement performed outside measurements gaps, or an intra-frequency CSI-RS layer 3 (L3) measurement and RSSI/channel occupancy measurement with no measurement gap. For an FR1 only carrier aggregation, the CSSF_{outside_gap,i} for an inter-frequency measurement object with no measurement gap may be equal to N_{SCC_SSB} +Y+2x N_{SCC_CSIRS}, where N_{SCC_SSB} indicates a number of configured secondary cell(s) (SCell(s)) with only an SSB based L3 measurement configured), and N_{SCC_CSIRS} indicates a number of configured SCell(s) with either both an SSB and CSI-RS based L3 measurement configured or only a CSI-RS based L3 measurement configured. Further, Y indicates a number of configured inter-frequency measurement objects without a measurement gap that are being measured outside of the measurement gap for a carrier capable UE, and is otherwise equal to zero. For an inter-frequency configured with multiple SMTCs with different SMTC offset values, the inter-frequency may be considered as multiple independent inter-frequencies configured with different SMTCs.

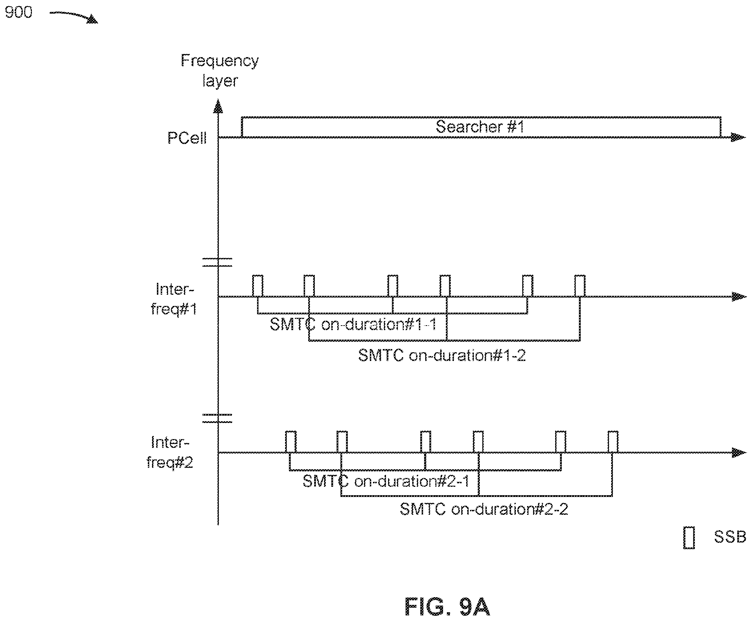

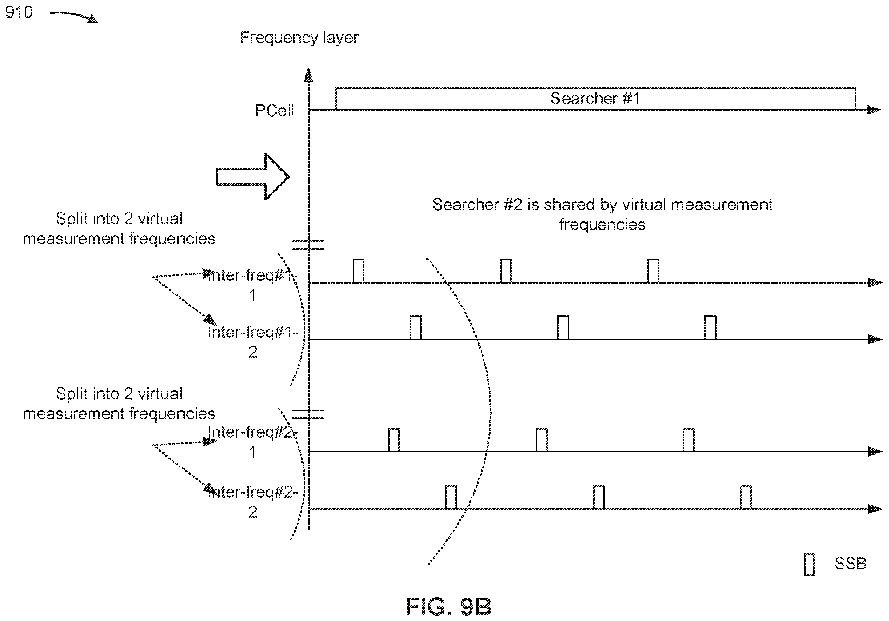

Figs. 9A and 9B are diagrams illustrating examples 900, 910 associated with multiple measurement frequencies, in accordance with the present disclosure.

As shown by Fig. 9A, a first cell search may be dedicated for a PCell frequency/carrier. Remaining measurement carriers may include a first inter-frequency and a second inter-frequency. The first inter-frequency may be associated with a first SMTC (e.g., *SMTC on-duration#1-1*) and a second SMTC (e.g., *SMTC on-duration#1-2*). The second inter-frequency may be associated with a third SMTC (e.g., *SMTC on-duration#2-1*) and a fourth SMTC (e.g., *SMTC on-duration#2-2*).

As shown by Fig. 9B, the first inter-frequency may be split into two virtual measurement frequencies (e.g., *Inter-freq#1-1* and *Inter-freq#1-2*), and the second inter-frequency may be split into two virtual measurement frequencies (e.g., *Inter-freq#2-1* and *Inter-freq#2-2).* A second cell search may be shared by the virtual measurement frequencies. The second cell search may be shared by four separate virtual measurement frequencies. In other words, the first inter-frequency and the second inter-frequency may be treated as multiple independent virtual measurement frequencies in terms of a measurement period/interval and a CSSF, and the multiple independent virtual measurement frequencies may be shared by a same cell search engine.

As indicated above, Fig. 9A and 9B are provided as examples. Other examples may differ from what is described with regard to Figs. 9A and 9B.

An NTN cell may have a larger cell size than a terrestrial network cell, which may result in an NTN being unable to properly configure measurement gaps for individual UEs in the NTN cell because each UE position may not be known to the NTN. The NTN may configure measurement gaps and measurement related parameters assuming that UEs are located at a specific position, such as a reference position (e.g., a cell center). A configured set of measurement gaps may not accommodate SMTCs configured for the UE. The UE may be configured with measurement gaps which have a relatively long duration (a measurement gap length) and a relatively short periodicity (a measurement gap repetition period), which may result in a loss of available downlink resources for a physical downlink control channel (PDCCH) and/or physical downlink shared channel (PDSCH) scheduling/monitoring.

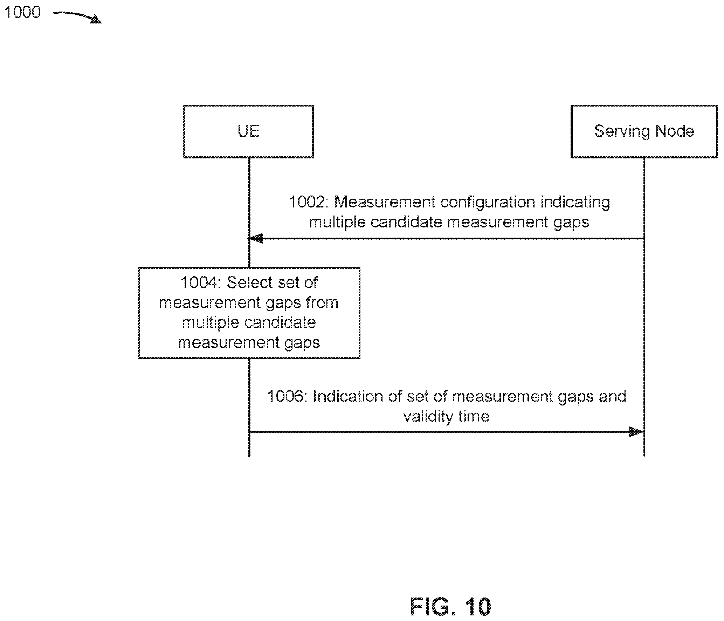

Fig. 10 is a diagram illustrating an example 1000 associated with selecting a set of measurement gaps, in accordance with the present disclosure. As shown in Fig. 10, example 1000 includes communication between a UE (e.g., UE 120) and a serving node (e.g., base station 110) via a satellite (e.g., serving satellite 112). In some aspects, the UE and the serving node may be included in a wireless network, such as wireless network 100.

As shown by reference number 1002, the UE may receive, from the serving node associated with a serving cell in an NTN, a measurement configuration that indicates multiple candidate measurement gaps. A candidate measurement gap may be a measurement gap that is available for the UE to use to perform measurements.

As shown by reference number 1004, the UE may select a set of measurement gaps from the multiple candidate measurement gaps indicated in the measurement configuration based at least in part on one or more characteristics of the serving cell or the UE. The UE may select the set of measurement gaps based at least in part on ephemeris information associated with the serving cell, time-drift information associated with the serving cell, UE position, SMTC parameters configured for the UE, a quantity of SMTCs that are able to be accommodated in measurement gaps, candidate measurement gap parameters, a relative time offset between the serving cell and neighbor cells, the amount of time for which the set of measurement gaps is valid, and/or a loss of downlink resources due to measurement gaps. The relative time offset may be based at least in part on additional target or neighbor cell information that includes ephemeris information associated with the target cell and the neighbor cell, a time-drift rate of a satellite associated with the target cell and a time-drift rate of a satellite associated with the neighbor cell, and/or a reference position. The reference position may be associated with a center position of the serving cell or a position used by the serving node when the serving node configures the SMTC parameters and the candidate measurement gap parameters.

As shown by reference number 1006, the UE may transmit, to the serving node, an indication of the set of measurement gaps and an amount of time for which the set of measurement gaps is valid. The set of measurement gaps may be applicable for neighbor or target cell measurements from a satellite different from the satellite (e.g., a serving satellite) associated with the serving cell. In some aspects, the UE may receive, from the serving node, a reconfiguration or an activation of one or more measurement gaps based at least in part on the set of measurement gaps reported to the serving node. In some aspects, the UE may receive, from the serving node, a request for an updated set of measurement gaps within the amount of time for which the set of measurement gaps is valid, and the UE may transmit an indication of the updated set of measurement gaps based at least in part on the request.

In some aspects, different UEs may experience different propagation delays from a same set of satellites due to different UE locations. In order to address uncertainties due to an unknown UE position to the NTN, the UE and the NTN may exchange information to identify and configure best suitable measurement gaps for the UE without reporting UE position information.

In some aspects, the UE may be configured with multiple candidate measurement gaps from the serving node. The UE may select a preferred set of measurement gaps among the multiple candidate measurement gaps, and the UE may transmit a report of the preferred set of measurement gaps to the serving node. The serving node may reconfigure and/or activate measurement gaps based at least in part on the report. The UE may additionally indicate a timer/time information, which may indicate a period of time for which the preferred set of measurement gaps indicated in the report is expected to be in use from a UE perspective. When the UE indicates the timer/time information, the serving node may request another selection/update of the preferred set of measurement gaps within a reported time period starting from a slot in which information is received.

In some aspects, the UE may select the preferred set of measurement gaps based at least in part on the ephemeris information associated with the serving node, time-drift information associated with the serving node (e.g., a common timing advance or a feeder link propagation delay), the UE position, the SMTC parameters, the candidate measurement gap parameters, and/or the relative time offset between the serving cell and the neighbor cells. The relative time offset may be derived based at least in part on additional target/neighbor cell information such as the ephemeris, the time-drift rate, and/or the reference position (e.g., the center position of the cell and/or a position that is used/assumed when the NTN configures SMTC and measurement gap parameters. In some aspects, when the UE selects the preferred set of measurement gaps, criteria used by the UE may involve the quantity of SMTCs that may be accommodated in the measurement gaps, a length of time (e.g., a validity time) for which the preferred set of measurement gaps is valid, and/or the loss of downlink resources due to the measurement gaps. The preferred set of measurement gaps may be only applicable for neighbor/target cell measurements from a different satellite than the serving satellite.

As indicated above, Fig. 10 is provided as an example. Other examples may differ from what is described with regard to Fig. 10.

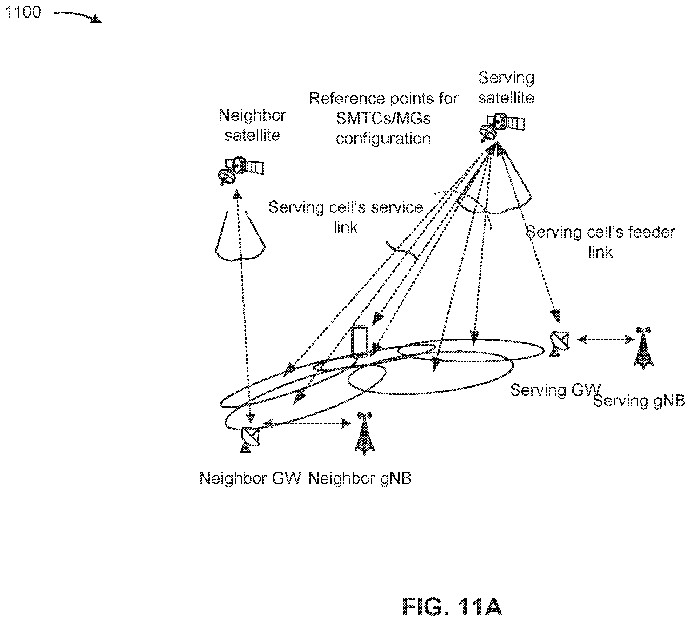

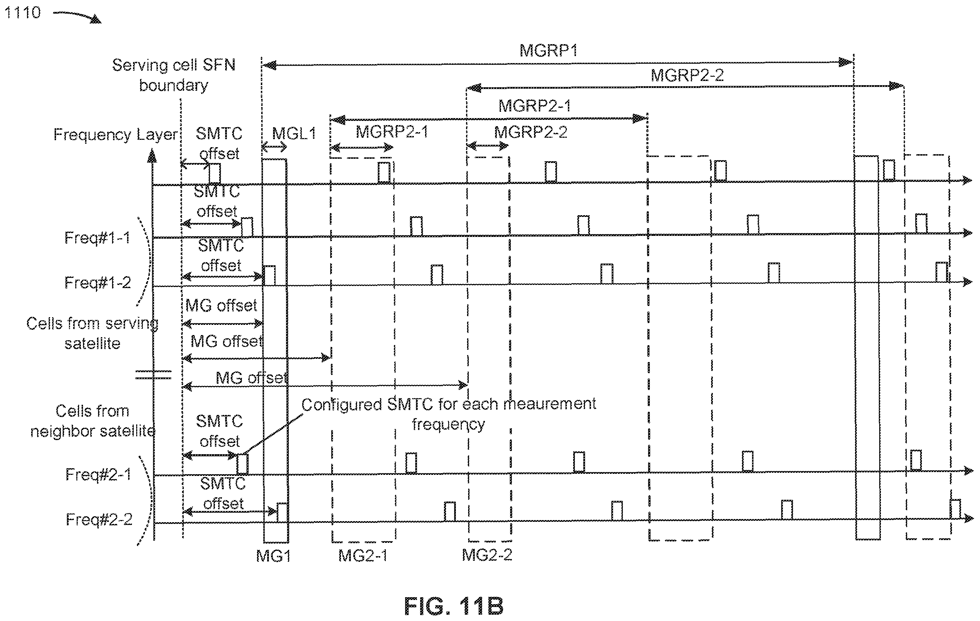

Figs. 11a and 11B are diagrams illustrating examples 1100, 1110 associated with a measurement gap selection and configuration, in accordance with the present disclosure.

As shown by Fig. 11A, a UE may receive communications from a serving gNB via a serving gateway and a serving satellite. A link between the UE and the serving satellite may be a serving cell service link. A link between the serving satellite and the serving gateway may be a serving cell feeder link. The serving satellite may be associated with a plurality of reference points for SMTCs and/or a measurement gap configuration. A neighbor satellite may be associated with a neighbor gNB and a neighbor gateway.

As shown by Fig. 11B, a time/frequency domain diagram of an SMTC and a measurement gap configuration may be defined from a UE perspective. Cells from the serving satellite may be associated with a serving cell, a first frequency, and a second frequency, which each may be associated with an SMTC offset. Cells from the neighbor satellite may be associated with a third frequency and a fourth frequency, which each may be associated with an SMTC offset. The SMTC offset may be associated with a configured SMTC for each measurement frequency. Measurement gap lengths and measurement gap repetition periods may be defined for performing measurements for each of the frequencies associated with the cells from the serving satellite and the cells from the neighbor satellite.

As indicated above, Figs. 11A and 11B are provided as examples. Other examples may differ from what is described with regard to Figs. 11A and 11B.

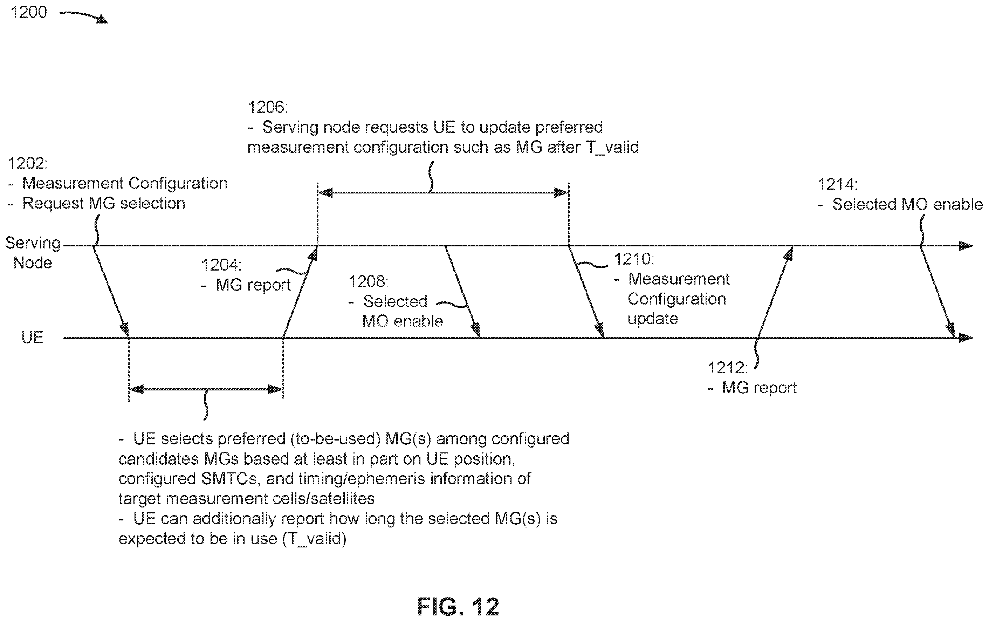

Fig. 12 is a diagram illustrating an example 1200 associated with a measurement gap selection and configuration, in accordance with the present disclosure.

As shown by reference number 1202, a serving node may transmit, to a UE, a measurement configuration and a request for a measurement gap selection. The measurement configuration may indicate configured SMTCs in measurement objects (MOs) and configured candidate measurement gaps. As shown by reference number 1204, in a measurement gap selection and report, the UE may select preferred (to-be-used) measurement gaps among the configured candidate measurement gaps based at least in part on a UE position, the configured SMTCs, and timing/ephemeris information of measurement cells/satellites. The UE may report the preferred measurement gaps to the serving node. The UE may additionally report to the serving node how long the selected measurement gaps are expected to be in use (*T_valid*). As shown by reference number 1206, the serving node may request the UE to update preferred measurement configurations, such as the measurement gap, after *T_valid* expires. As shown by reference number 1208, the serving node may transmit, to the UE, a selected measurement object enable command. As shown by reference number 1210, the serving node may transmit, to the UE, a measurement configuration update (e.g., updated configured SMTCs). As shown by reference number 1212, the UE may perform a measurement gap selection and report based at least in part on the measurement configuration update. As shown by reference number 1214, the serving node may transmit, to the UE, another selected measurement object enable command.

As indicated above, Fig. 12 is provided as an example. Other examples may differ from what is described with regard to Fig. 12.

Fig. 13 is a diagram illustrating an example process 1300 performed, for example, by a UE, in accordance with the present disclosure. Example process 1300 is an example where the UE (e.g., UE 120) performs operations associated with performing measurements for NTNs.

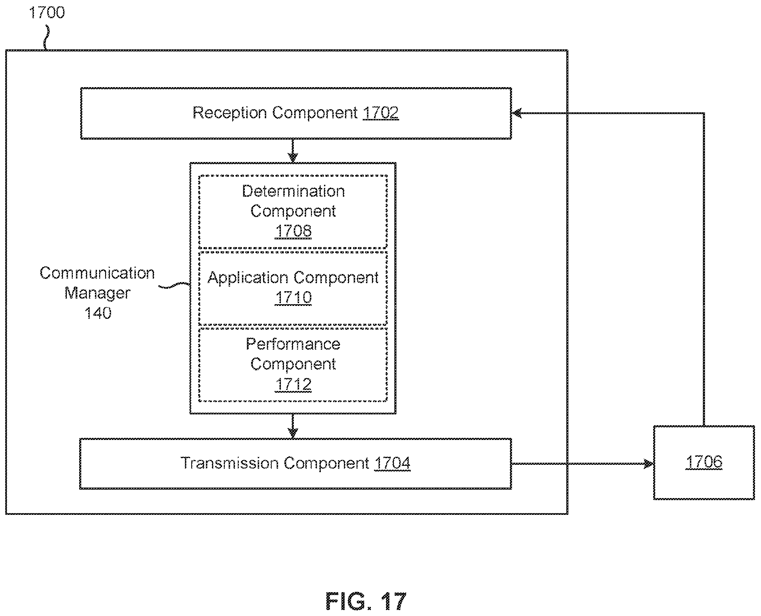

As shown in Fig. 13, in some aspects, process 1300 may include determining a scaling factor for a UE measurement period based at least in part on the UE being associated with an NTN (block 1310). For example, the UE (e.g., using communication manager 140 and/or determination component 1708, depicted in Fig. 17) may determine a scaling factor for a UE measurement period based at least in part on the UE being associated with an NTN, as described above.

As further shown in Fig. 13, in some aspects, process 1300 may include applying the scaling factor to the UE measurement period to obtain a scaled UE measurement period (block 1320). For example, the UE (e.g., using communication manager 140 and/or application component 1710, depicted in Fig. 17) may apply the scaling factor to the UE measurement period to obtain a scaled UE measurement period, as described above.

As further shown in Fig. 13, in some aspects, process 1300 may include performing a UE measurement during the scaled UE measurement period (block 1330). For example, the UE (e.g., using communication manager 140 and/or performance component 1712, depicted in Fig. 17) may perform a UE measurement during the scaled UE measurement period, as described above.

Process 1300 may include additional aspects, such as any single aspect or any combination of aspects described below and/or in connection with one or more other processes described elsewhere herein.

In a first aspect, process 1300 includes determining the scaling factor based at least in part on one or more of an altitude of a satellite associated with the NTN, an elevation angle of the satellite with respect to the UE, or a radius of a beam footprint associated with a measurement cell.

In a second aspect, alone or in combination with the first aspect, process 1300 includes receiving, from a serving node associated with the NTN, an indication of the scaling factor for the UE measurement period.

In a third aspect, alone or in combination with one or more of the first and second aspects, process 1300 includes receiving the indication via a UE-specific signal, a UE group-specific signal, or a satellite-specific signal.

In a fourth aspect, alone or in combination with one or more of the first through third aspects, process 1300 includes determining to apply the scaling factor to the UE measurement period based at least in part on a satellite type of a measurement cell, wherein the measurement cell is associated with a serving node of the UE and the serving node is associated with the satellite type.

In a fifth aspect, alone or in combination with one or more of the first through fourth aspects, the satellite type of the measurement cell is a non-geostationary satellite with an Earth moving cell deployment.

In a sixth aspect, alone or in combination with one or more of the first through fifth aspects, process 1300 includes determining whether to apply the scaling factor to the UE measurement period based at least in part on one or more of: the measurement cell being associated with a terrestrial network, the satellite type of the measurement cell being a geostationary satellite, or the satellite type of the measurement cell being a non-geostationary satellite with a quasi-Earth fixed cell deployment.

In a seventh aspect, alone or in combination with one or more of the first through sixth aspects, the measurement is associated with one or more of an intra-frequency NR cell, an inter-frequency NR cell, a radio link monitoring evaluation period, a beam failure detection evaluation period, a candidate beam detection evaluation period, a primary synchronization signal detection period, or a secondary synchronization signal detection period.

In an eighth aspect, alone or in combination with one or more of the first through seventh aspects, the scaling factor is applied to a discontinuous reception cycle length.

Although Fig. 13 shows example blocks of process 1300, in some aspects, process 1300 may include additional blocks, fewer blocks, different blocks, or differently arranged blocks than those depicted in Fig. 13. Additionally, or alternatively, two or more of the blocks of process 1300 may be performed in parallel.

Fig. 14 is a diagram illustrating an example process 1400 performed, for example, by a UE, in accordance with the present disclosure. Example process 1400 is an example where the UE (e.g., UE 120) performs operations associated with performing measurements for NTNs.

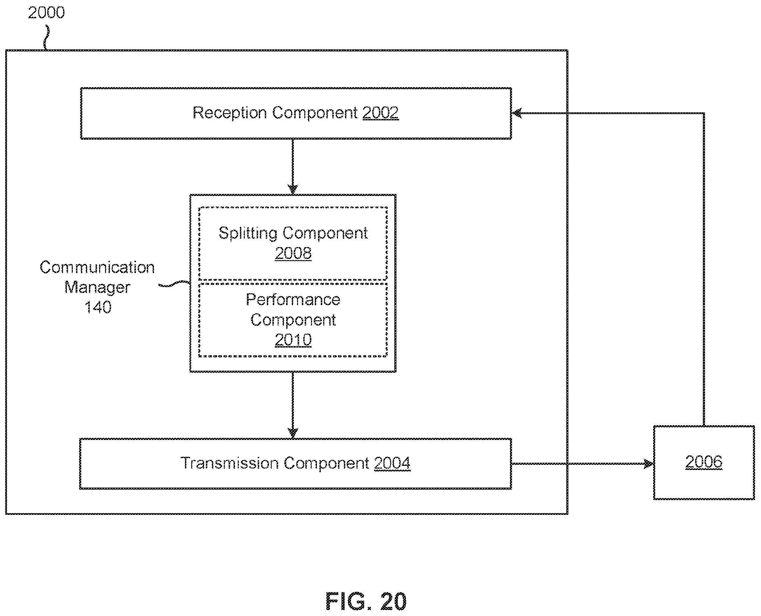

As shown in Fig. 14, in some aspects, process 1400 may include receiving, from a serving node associated with an NTN, a configuration that indicates multiple SMTCs for a measurement frequency (block 1410). For example, the UE (e.g., using communication manager 140 and/or reception component 2002, depicted in Fig. 20) may receive, from a serving node associated with an NTN, a configuration that indicates multiple SMTCs for a measurement frequency, as described above.

As further shown in Fig. 14, in some aspects, process 1400 may include splitting the measurement frequency into multiple measurement frequencies, wherein each measurement frequency is associated with a different SMTC from the multiple SMTCs for the measurement frequency (block 1420). For example, the UE (e.g., using communication manager 140 and/or splitting component 2008, depicted in Fig. 20) may split the measurement frequency into multiple measurement frequencies, wherein each measurement frequency is associated with a different SMTC from the multiple SMTCs for the measurement frequency, as described above.

As further shown in Fig. 14, in some aspects, process 1400 may include performing cell search functions using a cell search engine that is shared among the multiple measurement frequencies (block 1430). For example, the UE (e.g., using communication manager 140 and/or performance component 2010, depicted in Fig. 20) may perform cell search functions using a cell search engine that is shared between the multiple measurement frequencies, as described above.

Process 1400 may include additional aspects, such as any single aspect or any combination of aspects described below and/or in connection with one or more other processes described elsewhere herein.

In a first aspect, the cell search engine is a second cell search engine, and process 1400 includes performing cell search functions using a first cell search engine that is dedicated to a primary cell frequency or carrier.

In a second aspect, alone or in combination with the first aspect, each of the multiple SMTCs is associated with a different SMTC offset value.

In a third aspect, alone or in combination with one or more of the first and second aspects, the cell search engine is equally shared between the multiple measurement frequencies.

In a fourth aspect, alone or in combination with one or more of the first through third aspects, the cell search engine is non-equally shared between the multiple measurement frequencies, and a sharing factor between the multiple measurement frequencies is based at least in part on measurement frequencies associated with one or more satellites different than a serving cell satellite.

In a fifth aspect, alone or in combination with one or more of the first through fourth aspects, the multiple measurement frequencies are independent from each other with respect to a measurement period and with respect to a carrier specific scaling factor.

In a sixth aspect, alone or in combination with one or more of the first through fifth aspects, the multiple measurement frequencies are associated with multiple inter-frequencies.

Although Fig. 14 shows example blocks of process 1400, in some aspects, process 1400 may include additional blocks, fewer blocks, different blocks, or differently arranged blocks than those depicted in Fig. 14. Additionally, or alternatively, two or more of the blocks of process 1400 may be performed in parallel.

Fig. 15 is a diagram illustrating an example process 1500 performed, for example, by a UE, in accordance with the present disclosure. Example process 1500 is an example where the UE (e.g., UE 120) performs operations associated with performing measurements for NTNs.

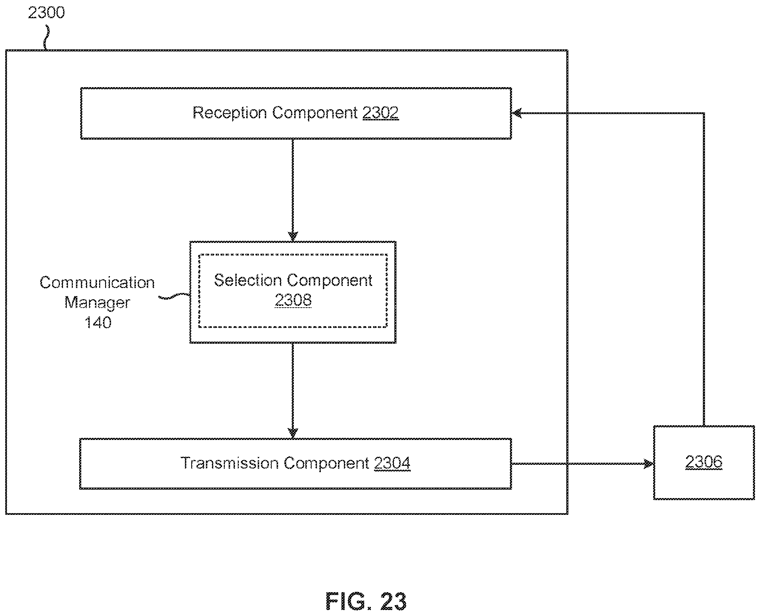

As shown in Fig. 15, in some aspects, process 1500 may include receiving, from a serving node in an NTN, a measurement configuration that indicates multiple candidate measurement gaps (block 1510). For example, the UE (e.g., using communication manager 140 and/or reception component 2302, depicted in Fig. 23) may receive, from a serving node in an NTN, a measurement configuration that indicates multiple candidate measurement gaps, as described above.

As further shown in Fig. 15, in some aspects, process 1500 may include selecting one or more measurement gaps from the multiple candidate measurement gaps indicated in the measurement configuration based at least in part on one or more characteristics of the serving node or the UE (block 1520). For example, the UE (e.g., using communication manager 140 and/or selection component 2308, depicted in Fig. 23) may select one or more measurement gaps from the multiple candidate measurement gaps indicated in the measurement configuration based at least in part on one or more characteristics of the serving node or the UE, as described above.

As further shown in Fig. 15, in some aspects, process 1500 may include transmitting, to the serving node, an indication of the one or more measurement gaps and a time duration for which the one or more measurement gaps are valid at the UE (block 1530). For example, the UE (e.g., using communication manager 140 and/or transmission component 2304, depicted in Fig. 23) may transmit, to the serving node, an indication of the one or more measurement gaps and a time duration for which the one or more measurement gaps are valid at the UE, as described above.

Process 1500 may include additional aspects, such as any single aspect or any combination of aspects described below and/or in connection with one or more other processes described elsewhere herein.

In a first aspect, process 1500 includes receiving, from the serving node, a reconfiguration or an activation of one or more measurement gaps based at least in part on the one or more measurement gaps reported to the serving node.

In a second aspect, alone or in combination with the first aspect, selecting the one or more measurement gaps is based at least in part on one or more of: ephemeris information associated with the serving node, time-drift information associated with the serving node, UE position, SMTC parameters configured for the UE, a quantity of SMTCs supported in measurement gaps, candidate measurement gap parameters, a relative time offset between the serving node and neighbor nodes, the time duration for which the one or more measurement gaps are valid, or a loss of downlink resources due to measurement gaps.

In a third aspect, alone or in combination with one or more of the first and second aspects, the relative time offset is based at least in part on additional target or neighbor cell information that includes one or more of ephemeris information, a time-drift rate, or a reference position.

In a fourth aspect, alone or in combination with one or more of the first through third aspects, the reference position is associated with a center position of a serving cell and the candidate measurement gap parameters.

In a fifth aspect, alone or in combination with one or more of the first through fourth aspects, process 1500 includes receiving, from the serving node, a request for an updated one or more measurement gaps within the time duration for which the set of measurement gaps are valid.

In a sixth aspect, alone or in combination with one or more of the first through fifth aspects, the one or more measurement gaps are applicable for neighbor or target cell measurements from a satellite different from a serving satellite associated with the serving node.

Although Fig. 15 shows example blocks of process 1500, in some aspects, process 1500 may include additional blocks, fewer blocks, different blocks, or differently arranged blocks than those depicted in Fig. 15. Additionally, or alternatively, two or more of the blocks of process 1500 may be performed in parallel.

Fig. 16 is a diagram illustrating an example process 1600 performed, for example, by a serving node, in accordance with the present disclosure. Example process 1600 is an example where the serving node (e.g., base station 110) performs operations associated with performing measurements for NTNs.

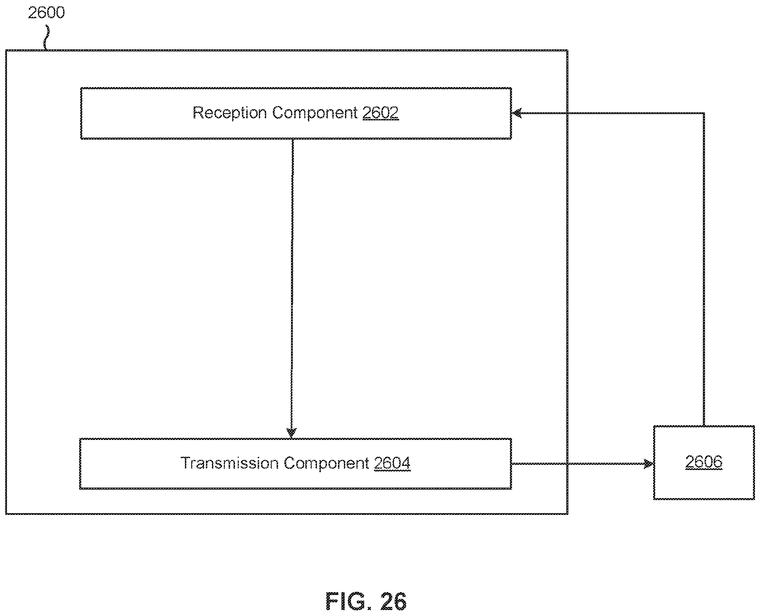

As shown in Fig. 16, in some aspects, process 1600 may include transmitting, to a UE from the serving node in an NTN, a measurement configuration that indicates multiple candidate measurement gaps (block 1610). For example, the serving node (e.g., using transmission component 2604, depicted in Fig. 26) may transmit, to a UE from the serving node in an NTN, a measurement configuration that indicates multiple candidate measurement gaps, as described above.

As further shown in Fig. 16, in some aspects, process 1600 may include receiving, from the UE, an indication of one or more measurement gaps selected from the multiple candidate measurement gaps indicated in the measurement configuration and a time duration for which the set of measurement gaps are valid at the UE (block 1620). For example, the serving node (e.g., using reception component 2602, depicted in Fig. 26) may receive, from the UE, an indication of one or more measurement gaps selected from the multiple candidate measurement gaps indicated in the measurement configuration and a time duration for which the set of measurement gaps are valid at the UE, as described above.

Process 1600 may include additional aspects, such as any single aspect or any combination of aspects described below and/or in connection with one or more other processes described elsewhere herein.

In a first aspect, process 1600 includes transmitting, to the UE, a reconfiguration or an activation of one or more measurement gaps based at least in part on the one or more measurement gaps reported to the serving node.

In a second aspect, alone or in combination with the first aspect, the one or more measurement gaps are selected based at least in part on one or more of: ephemeris information associated with the serving node, time-drift information associated with the serving node, UE position, SMTC parameters configured for the UE, a quantity of SMTCs supported in measurement gaps, candidate measurement gap parameters, a relative time offset between the serving node and neighbor nodes, the time duration for which the one or more measurement gaps are valid, or a loss of downlink resources due to measurement gaps.

In a third aspect, alone or in combination with one or more of the first and second aspects, the relative time offset is based at least in part on additional target or neighbor cell information that includes one or more of ephemeris information, a time-drift rate, or a reference position.

In a fourth aspect, alone or in combination with one or more of the first through third aspects, the reference position is associated with a center position of a serving cell or a position used by the serving node when configuring the SMTC parameters and the candidate measurement gap parameters.

In a fifth aspect, alone or in combination with one or more of the first through fourth aspects, process 1600 includes transmitting, to the UE, a request for an updated one or more measurement gaps within the time duration for which the one or more measurement gaps are valid.

In a sixth aspect, alone or in combination with one or more of the first through fifth aspects, the one or more measurement gaps are applicable for neighbor or target cell measurements from a satellite different from a serving satellite associated with the serving node.

Although Fig. 16 shows example blocks of process 1600, in some aspects, process 1600 may include additional blocks, fewer blocks, different blocks, or differently arranged blocks than those depicted in Fig. 16. Additionally, or alternatively, two or more of the blocks of process 1600 may be performed in parallel.

Fig. 17 is a diagram of an example apparatus 1700 for wireless communication. The apparatus 1700 may be a UE, or a UE may include the apparatus 1700. In some aspects, the apparatus 1700 includes a reception component 1702 and a transmission component 1704, which may be in communication with one another (for example, via one or more buses and/or one or more other components). As shown, the apparatus 1700 may communicate with another apparatus 1706 (such as a UE, a base station, or another wireless communication device) using the reception component 1702 and the transmission component 1704. As further shown, the apparatus 1700 may include the communication manager 140. The communication manager 140 may include one or more of a determination component 1708, an application component 1710, or a performance component 1712, among other examples.

In some aspects, the apparatus 1700 may be configured to perform one or more operations described herein in connection with Figs. 6-12. Additionally, or alternatively, the apparatus 1700 may be configured to perform one or more processes described herein, such as process 1300 of Fig. 13. In some aspects, the apparatus 1700 and/or one or more components shown in Fig. 17 may include one or more components of the UE described in connection with Fig. 2. Additionally, or alternatively, one or more components shown in Fig. 17 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1702 may receive communications, such as reference signals, control information, data communications, or a combination thereof, from the apparatus 1706. The reception component 1702 may provide received communications to one or more other components of the apparatus 1700. In some aspects, the reception component 1702 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1700. In some aspects, the reception component 1702 may include one or more antennas, a modem, a demodulator, a MIMO detector, a receive processor, a controller/processor, a memory, or a combination thereof, of the UE described in connection with Fig. 2.

The transmission component 1704 may transmit communications, such as reference signals, control information, data communications, or a combination thereof, to the apparatus 1706. In some aspects, one or more other components of the apparatus 1700 may generate communications and may provide the generated communications to the transmission component 1704 for transmission to the apparatus 1706. In some aspects, the transmission component 1704 may perform signal processing on the generated communications (such as filtering, amplification, modulation, digital-to-analog conversion, multiplexing, interleaving, mapping, or encoding, among other examples), and may transmit the processed signals to the apparatus 1706. In some aspects, the transmission component 1704 may include one or more antennas, a modem, a modulator, a transmit MIMO processor, a transmit processor, a controller/processor, a memory, or a combination thereof, of the UE described in connection with Fig. 2. In some aspects, the transmission component 1704 may be co-located with the reception component 1702 in a transceiver.

The determination component 1708 may determine a scaling factor for a UE measurement period based at least in part on the UE being associated with an NTN. The application component 1710 may apply the scaling factor to the UE measurement period to obtain a scaled UE measurement period. The performance component 1712 may perform a measurement during the scaled UE measurement period.

The reception component 1702 may receive, from a serving node associated with the NTN, an indication of the scaling factor for the UE measurement period. The determination component 1708 may determine to apply the scaling factor to the UE measurement period based at least in part on a satellite type of a measurement cell. The determination component 1708 may determine that the scaling factor is to not be applied to the UE measurement period based at least in part on one or more of: the measurement cell being associated with a terrestrial network, the satellite type of the measurement cell being a geostationary satellite, or the satellite type of the measurement cell being a non-geostationary satellite with a quasi-Earth fixed cell deployment.

The number and arrangement of components shown in Fig. 17 are provided as an example. In practice, there may be additional components, fewer components, different components, or differently arranged components than those shown in Fig. 17. Furthermore, two or more components shown in Fig. 17 may be implemented within a single component, or a single component shown in Fig. 17 may be implemented as multiple, distributed components. Additionally, or alternatively, a set of (one or more) components shown in Fig. 17 may perform one or more functions described as being performed by another set of components shown in Fig. 17.

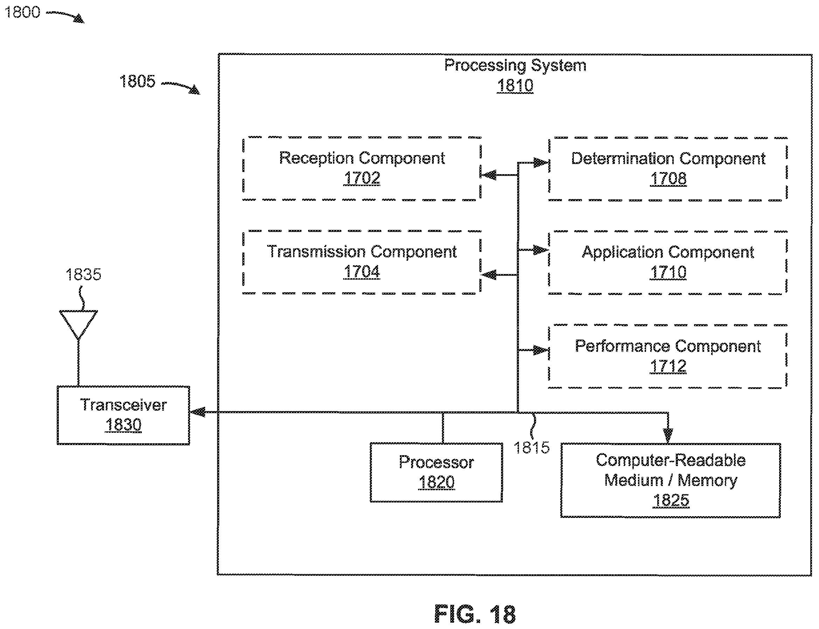

Fig. 18 is a diagram illustrating an example 1800 of a hardware implementation for an apparatus 1805 employing a processing system 1810. The apparatus 1805 may be a UE.

The processing system 1810 may be implemented with a bus architecture, represented generally by the bus 1815. The bus 1815 may include any number of interconnecting buses and bridges depending on the specific application of the processing system 1810 and the overall design constraints. The bus 1815 links together various circuits including one or more processors and/or hardware components, represented by the processor 1820, the illustrated components, and the computer-readable medium / memory 1825. The bus 1815 may also link various other circuits, such as timing sources, peripherals, voltage regulators, and/or power management circuits.

The processing system 1810 may be coupled to a transceiver 1830. The transceiver 1830 is coupled to one or more antennas 1835. The transceiver 1830 provides a means for communicating with various other apparatuses over a transmission medium. The transceiver 1830 receives a signal from the one or more antennas 1835, extracts information from the received signal, and provides the extracted information to the processing system 1810, specifically the reception component 1702. In addition, the transceiver 1830 receives information from the processing system 1810, specifically the transmission component 1704, and generates a signal to be applied to the one or more antennas 1835 based at least in part on the received information.

The processing system 1810 includes a processor 1820 coupled to a computer-readable medium / memory 1825. The processor 1820 is responsible for general processing, including the execution of software stored on the computer-readable medium / memory 1825. The software, when executed by the processor 1820, causes the processing system 1810 to perform the various functions described herein for any particular apparatus. The computer-readable medium / memory 1825 may also be used for storing data that is manipulated by the processor 1820 when executing software. The processing system further includes at least one of the illustrated components. The components may be software modules running in the processor 1820, resident/stored in the computer readable medium / memory 1825, one or more hardware modules coupled to the processor 1820, or some combination thereof.

In some aspects, the processing system 1810 may be a component of the UE 120 and may include the memory 282 and/or at least one of the TX MIMO processor 266, the RX processor 258, and/or the controller/processor 280. In some aspects, the apparatus 1805 for wireless communication includes means for determining a scaling factor for a UE measurement period based at least in part on the UE being associated with an NTN; means for applying the scaling factor to the UE measurement period to obtain a scaled UE measurement period; and means for performing a measurement during the scaled UE measurement period. The aforementioned means may be one or more of the aforementioned components of the apparatus 1700 and/or the processing system 1810 of the apparatus 1805 configured to perform the functions recited by the aforementioned means. As described elsewhere herein, the processing system 1810 may include the TX MIMO processor 266, the RX processor 258, and/or the controller/processor 280. In one configuration, the aforementioned means may be the TX MIMO processor 266, the RX processor 258, and/or the controller/processor 280 configured to perform the functions and/or operations recited herein.

Fig. 18 is provided as an example. Other examples may differ from what is described in connection with Fig. 18.

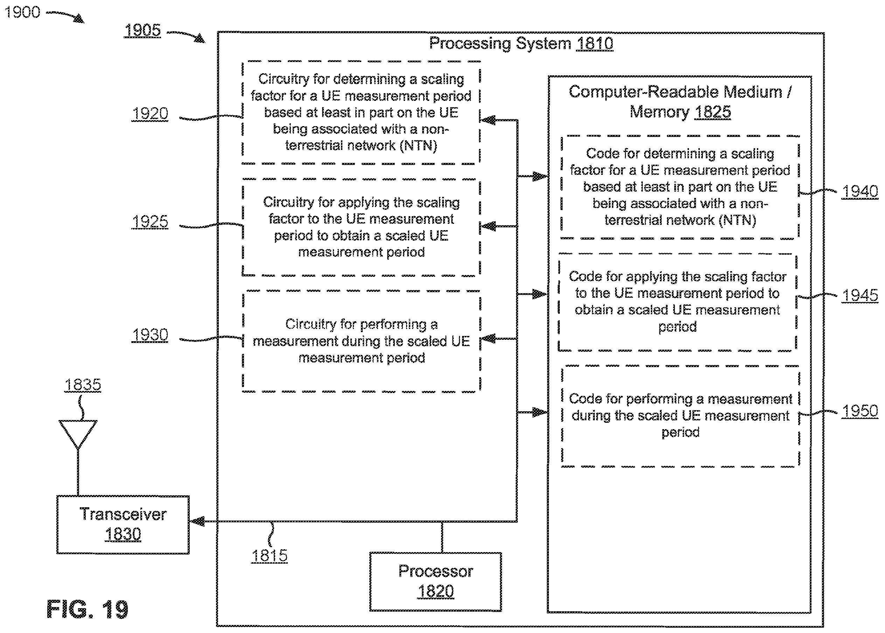

Fig. 19 is a diagram illustrating an example 1900 of an implementation of code and circuitry for an apparatus 1905. The apparatus 1905 may be a UE.

As further shown in Fig. 19, the apparatus may include circuitry for determining a scaling factor for a UE measurement period based at least in part on the UE being associated with an NTN (circuitry 1920). For example, the apparatus may include circuitry to enable the apparatus to determine a scaling factor for a UE measurement period based at least in part on the UE being associated with an NTN.

As further shown in Fig. 19, the apparatus may include circuitry for applying the scaling factor to the UE measurement period to obtain a scaled UE measurement period (circuitry 1925). For example, the apparatus may include circuitry to enable the apparatus to apply the scaling factor to the UE measurement period to obtain a scaled UE measurement period.

As further shown in Fig. 19, the apparatus may include circuitry for performing a measurement during the scaled UE measurement period (circuitry 1930). For example, the apparatus may include circuitry to enable the apparatus to perform a measurement during the scaled UE measurement period.

As further shown in Fig. 19, the apparatus may include, stored in computer-readable medium 1825, code for determining a scaling factor for a UE measurement period based at least in part on the UE being associated with an NTN (code 1940). For example, the apparatus may include code that, when executed by the processor 1820, may cause the transceiver 1830 to determine a scaling factor for a UE measurement period based at least in part on the UE being associated with an NTN.

As further shown in Fig. 19, the apparatus may include, stored in computer-readable medium 1825, code for applying the scaling factor to the UE measurement period to obtain a scaled UE measurement period (code 1945). For example, the apparatus may include code that, when executed by the processor 1820, may cause the transceiver 1830 to apply the scaling factor to the UE measurement period to obtain a scaled UE measurement period.

As further shown in Fig. 19, the apparatus may include, stored in computer-readable medium 1825, code for performing a UE measurement during the scaled UE measurement period (code 1950). For example, the apparatus may include code that, when executed by the processor 1820, may cause the transceiver 1830 to perform a UE measurement during the scaled UE measurement period.

Fig. 19 is provided as an example. Other examples may differ from what is described in connection with Fig. 19.

Fig. 20 is a diagram of an example apparatus 2000 for wireless communication. The apparatus 2000 may be a UE, or a UE may include the apparatus 2000. In some aspects, the apparatus 2000 includes a reception component 2002 and a transmission component 2004, which may be in communication with one another (for example, via one or more buses and/or one or more other components). As shown, the apparatus 2000 may communicate with another apparatus 2006 (such as a UE, a base station, or another wireless communication device) using the reception component 2002 and the transmission component 2004. As further shown, the apparatus 2000 may include the communication manager 140. The communication manager 140 may include one or more of a splitting component 2008, or a performance component 2010, among other examples.

In some aspects, the apparatus 2000 may be configured to perform one or more operations described herein in connection with Figs. 6-12. Additionally, or alternatively, the apparatus 2000 may be configured to perform one or more processes described herein, such as process 1400 of Fig. 14. In some aspects, the apparatus 2000 and/or one or more components shown in Fig. 20 may include one or more components of the UE described in connection with Fig. 2. Additionally, or alternatively, one or more components shown in Fig. 20 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2002 may receive communications, such as reference signals, control information, data communications, or a combination thereof, from the apparatus 2006. The reception component 2002 may provide received communications to one or more other components of the apparatus 2000. In some aspects, the reception component 2002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2000. In some aspects, the reception component 2002 may include one or more antennas, a modem, a demodulator, a MIMO detector, a receive processor, a controller/processor, a memory, or a combination thereof, of the UE described in connection with Fig. 2.

The transmission component 2004 may transmit communications, such as reference signals, control information, data communications, or a combination thereof, to the apparatus 2006. In some aspects, one or more other components of the apparatus 2000 may generate communications and may provide the generated communications to the transmission component 2004 for transmission to the apparatus 2006. In some aspects, the transmission component 2004 may perform signal processing on the generated communications (such as filtering, amplification, modulation, digital-to-analog conversion, multiplexing, interleaving, mapping, or encoding, among other examples), and may transmit the processed signals to the apparatus 2006. In some aspects, the transmission component 2004 may include one or more antennas, a modem, a modulator, a transmit MIMO processor, a transmit processor, a controller/processor, a memory, or a combination thereof, of the UE described in connection with Fig. 2. In some aspects, the transmission component 2004 may be co-located with the reception component 2002 in a transceiver.

The reception component 2002 may receive, from a serving node associated with an NTN, a configuration that indicates multiple SMTCs for a measurement frequency. The splitting component 2008 may split the measurement frequency into multiple measurement frequencies, wherein each measurement frequency is associated with a different SMTC from the multiple SMTCs for the measurement frequency. The performance component 2010 may perform cell search functions using a cell search engine that is shared among the multiple measurement frequencies.

The number and arrangement of components shown in Fig. 20 are provided as an example. In practice, there may be additional components, fewer components, different components, or differently arranged components than those shown in Fig. 20. Furthermore, two or more components shown in Fig. 20 may be implemented within a single component, or a single component shown in Fig. 20 may be implemented as multiple, distributed components. Additionally, or alternatively, a set of (one or more) components shown in Fig. 20 may perform one or more functions described as being performed by another set of components shown in Fig. 20.

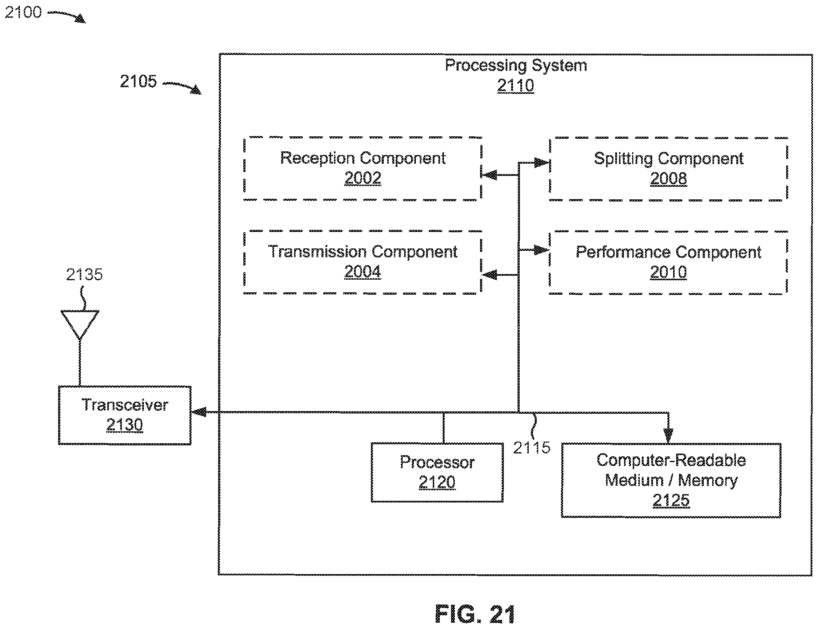

Fig. 21 is a diagram illustrating an example 2100 of a hardware implementation for an apparatus 2105 employing a processing system 2110. The apparatus 2105 may be a UE.

The processing system 2110 may be implemented with a bus architecture, represented generally by the bus 2115. The bus 2115 may include any number of interconnecting buses and bridges depending on the specific application of the processing system 2110 and the overall design constraints. The bus 2115 links together various circuits including one or more processors and/or hardware components, represented by the processor 2120, the illustrated components, and the computer-readable medium / memory 2125. The bus 2115 may also link various other circuits, such as timing sources, peripherals, voltage regulators, and/or power management circuits.

The processing system 2110 may be coupled to a transceiver 2130. The transceiver 2130 is coupled to one or more antennas 2135. The transceiver 2130 provides a means for communicating with various other apparatuses over a transmission medium. The transceiver 2130 receives a signal from the one or more antennas 2135, extracts information from the received signal, and provides the extracted information to the processing system 2110, specifically the reception component 2002. In addition, the transceiver 2130 receives information from the processing system 2110, specifically the transmission component 2004, and generates a signal to be applied to the one or more antennas 2135 based at least in part on the received information.

The processing system 2110 includes a processor 2120 coupled to a computer-readable medium / memory 2125. The processor 2120 is responsible for general processing, including the execution of software stored on the computer-readable medium / memory 2125. The software, when executed by the processor 2120, causes the processing system 2110 to perform the various functions described herein for any particular apparatus. The computer-readable medium / memory 2125 may also be used for storing data that is manipulated by the processor 2120 when executing software. The processing system further includes at least one of the illustrated components. The components may be software modules running in the processor 2120, resident/stored in the computer readable medium / memory 2125, one or more hardware modules coupled to the processor 2120, or some combination thereof.

In some aspects, the processing system 2110 may be a component of the UE 120 and may include the memory 282 and/or at least one of the TX MIMO processor 266, the RX processor 258, and/or the controller/processor 280. In some aspects, the apparatus 2105 for wireless communication includes means for receiving, from a serving node associated with an NTN, a configuration that indicates multiple SMTCs for a measurement frequency; means for splitting the measurement frequency into multiple measurement frequencies, wherein each measurement frequency is associated with a different SMTC from the multiple SMTCs for the measurement frequency; and means for performing cell search functions using a cell search engine that is shared between the multiple measurement frequencies. The aforementioned means may be one or more of the aforementioned components of the apparatus 2000 and/or the processing system 2110 of the apparatus 2105 configured to perform the functions recited by the aforementioned means. As described elsewhere herein, the processing system 2110 may include the TX MIMO processor 266, the RX processor 258, and/or the controller/processor 280. In one configuration, the aforementioned means may be the TX MIMO processor 266, the RX processor 258, and/or the controller/processor 280 configured to perform the functions and/or operations recited herein.

Fig. 21 is provided as an example. Other examples may differ from what is described in connection with Fig. 21.

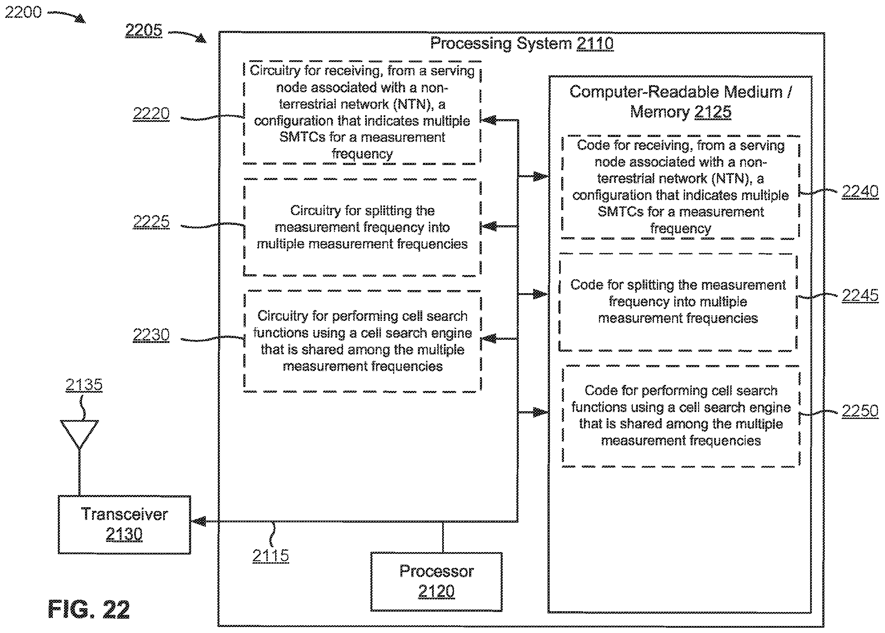

Fig. 22 is a diagram illustrating an example 2200 of an implementation of code and circuitry for an apparatus 2205. The apparatus 2205 may be a UE.

As further shown in Fig. 22, the apparatus may include circuitry for receiving, from a serving node associated with an NTN, a configuration that indicates multiple SMTCs for a measurement frequency (circuitry 2220). For example, the apparatus may include circuitry to enable the apparatus to receive, from a serving node associated with an NTN, a configuration that indicates multiple SMTCs for a measurement frequency.

As further shown in Fig. 22, the apparatus may include circuitry for splitting the measurement frequency into multiple measurement frequencies, wherein each measurement frequency is associated with a different SMTC from the multiple SMTCs for the measurement frequency (circuitry 2225). For example, the apparatus may include circuitry to enable the apparatus to split the measurement frequency into multiple measurement frequencies, wherein each measurement frequency is associated with a different SMTC from the multiple SMTCs for the measurement frequency.

As further shown in Fig. 22, the apparatus may include circuitry for performing cell search functions using a cell search engine that is shared among the multiple measurement frequencies (circuitry 2230). For example, the apparatus may include circuitry to enable the apparatus to perform cell search functions using a cell search engine that is shared among the multiple measurement frequencies.

As further shown in Fig. 22, the apparatus may include, stored in computer-readable medium 2125, code for receiving, from a serving node associated with an NTN, a configuration that indicates multiple SMTCs for a measurement frequency (code 2240). For example, the apparatus may include code that, when executed by the processor 2120, may cause the transceiver 2130 to receive, from a serving node associated with an NTN, a configuration that indicates multiple SMTCs for a measurement frequency.

As further shown in Fig. 22, the apparatus may include, stored in computer-readable medium 2125, code for splitting the measurement frequency into multiple measurement frequencies, wherein each measurement frequency is associated with a different SMTC from the multiple SMTCs for the measurement frequency (code 2245). For example, the apparatus may include code that, when executed by the processor 2120, may cause the transceiver 2130 to split the measurement frequency into multiple measurement frequencies, wherein each measurement frequency is associated with a different SMTC from the multiple SMTCs for the measurement frequency.

As further shown in Fig. 22, the apparatus may include, stored in computer-readable medium 2125, code for performing cell search functions using a cell search engine that is shared between the multiple measurement frequencies (code 2250). For example, the apparatus may include code that, when executed by the processor 2120, may cause the transceiver 2130 to perform cell search functions using a cell search engine that is shared between the multiple measurement frequencies.

Fig. 22 is provided as an example. Other examples may differ from what is described in connection with Fig. 22.

Fig. 23 is a diagram of an example apparatus 2300 for wireless communication. The apparatus 2300 may be a UE, or a UE may include the apparatus 2300. In some aspects, the apparatus 2300 includes a reception component 2302 and a transmission component 2304, which may be in communication with one another (for example, via one or more buses and/or one or more other components). As shown, the apparatus 2300 may communicate with another apparatus 2306 (such as a UE, a base station, or another wireless communication device) using the reception component 2302 and the transmission component 2304. As further shown, the apparatus 2300 may include the communication manager 140. The communication manager 140 may include a selection component 2308, among other examples.

In some aspects, the apparatus 2300 may be configured to perform one or more operations described herein in connection with Figs. 6-12. Additionally, or alternatively, the apparatus 2300 may be configured to perform one or more processes described herein, such as process 1500 of Fig. 15. In some aspects, the apparatus 2300 and/or one or more components shown in Fig. 23 may include one or more components of the UE described in connection with Fig. 2. Additionally, or alternatively, one or more components shown in Fig. 23 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2302 may receive communications, such as reference signals, control information, data communications, or a combination thereof, from the apparatus 2306. The reception component 2302 may provide received communications to one or more other components of the apparatus 2300. In some aspects, the reception component 2302 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2300. In some aspects, the reception component 2302 may include one or more antennas, a modem, a demodulator, a MIMO detector, a receive processor, a controller/processor, a memory, or a combination thereof, of the UE described in connection with Fig. 2.

The transmission component 2304 may transmit communications, such as reference signals, control information, data communications, or a combination thereof, to the apparatus 2306. In some aspects, one or more other components of the apparatus 2300 may generate communications and may provide the generated communications to the transmission component 2304 for transmission to the apparatus 2306. In some aspects, the transmission component 2304 may perform signal processing on the generated communications (such as filtering, amplification, modulation, digital-to-analog conversion, multiplexing, interleaving, mapping, or encoding, among other examples), and may transmit the processed signals to the apparatus 2306. In some aspects, the transmission component 2304 may include one or more antennas, a modem, a modulator, a transmit MIMO processor, a transmit processor, a controller/processor, a memory, or a combination thereof, of the UE described in connection with Fig. 2. In some aspects, the transmission component 2304 may be co-located with the reception component 2302 in a transceiver.

The reception component 2302 may receive, from a serving node associated with a serving cell in an NTN, a measurement configuration that indicates multiple candidate measurement gaps. The selection component 2308 may select one or more measurement gaps from the multiple candidate measurement gaps indicated in the measurement configuration based at least in part on one or more characteristics of the serving cell or the UE. The transmission component 2304 may transmit, to the serving node, an indication of the one or more measurement gaps and a time duration for which the set of measurement gaps are valid at the UE.

The reception component 2302 may receive, from the serving node, a reconfiguration or an activation of one or more measurement gaps based at least in part on the set of measurement gaps reported to the serving node. The reception component 2302 may receive, from the serving node, a request for an updated set of measurement gaps within the amount of time for which the set of measurement gaps is valid.

The number and arrangement of components shown in Fig. 23 are provided as an example. In practice, there may be additional components, fewer components, different components, or differently arranged components than those shown in Fig. 23. Furthermore, two or more components shown in Fig. 23 may be implemented within a single component, or a single component shown in Fig. 23 may be implemented as multiple, distributed components. Additionally, or alternatively, a set of (one or more) components shown in Fig. 23 may perform one or more functions described as being performed by another set of components shown in Fig. 23.

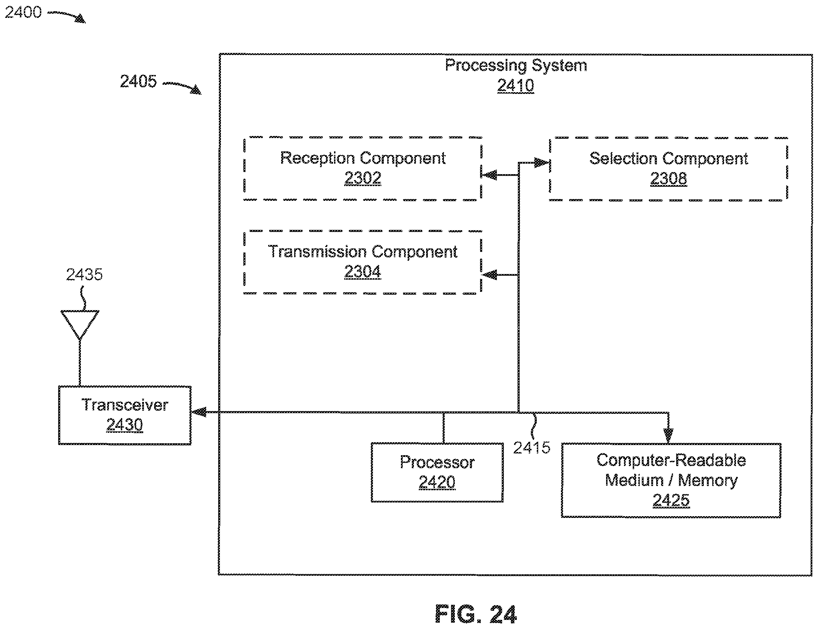

Fig. 24 is a diagram illustrating an example 2400 of a hardware implementation for an apparatus 2405 employing a processing system 2410. The apparatus 2405 may be a UE.

The processing system 2410 may be implemented with a bus architecture, represented generally by the bus 2415. The bus 2415 may include any number of interconnecting buses and bridges depending on the specific application of the processing system 2410 and the overall design constraints. The bus 2415 links together various circuits including one or more processors and/or hardware components, represented by the processor 2420, the illustrated components, and the computer-readable medium / memory 2425. The bus 2415 may also link various other circuits, such as timing sources, peripherals, voltage regulators, and/or power management circuits.

The processing system 2410 may be coupled to a transceiver 2430. The transceiver 2430 is coupled to one or more antennas 2435. The transceiver 2430 provides a means for communicating with various other apparatuses over a transmission medium. The transceiver 2430 receives a signal from the one or more antennas 2435, extracts information from the received signal, and provides the extracted information to the processing system 2410, specifically the reception component 2302. In addition, the transceiver 2430 receives information from the processing system 2410, specifically the transmission component 2304, and generates a signal to be applied to the one or more antennas 2435 based at least in part on the received information.

The processing system 2410 includes a processor 2420 coupled to a computer-readable medium / memory 2425. The processor 2420 is responsible for general processing, including the execution of software stored on the computer-readable medium / memory 2425. The software, when executed by the processor 2420, causes the processing system 2410 to perform the various functions described herein for any particular apparatus. The computer-readable medium / memory 2425 may also be used for storing data that is manipulated by the processor 2420 when executing software. The processing system further includes at least one of the illustrated components. The components may be software modules running in the processor 2420, resident/stored in the computer readable medium / memory 2425, one or more hardware modules coupled to the processor 2420, or some combination thereof.

In some aspects, the processing system 2410 may be a component of the UE 120 and may include the memory 282 and/or at least one of the TX MIMO processor 266, the RX processor 258, and/or the controller/processor 280. In some aspects, the apparatus 2405 for wireless communication includes means for receiving, from a serving node associated with a serving cell in an NTN, a measurement configuration that indicates multiple candidate measurement gaps; means for selecting a set of measurement gaps from the multiple candidate measurement gaps indicated in the measurement configuration based at least in part on one or more characteristics of the serving cell or the UE; and means for transmitting, to the serving node, an indication of the set of measurement gaps and an amount of time for which the set of measurement gaps is valid. The aforementioned means may be one or more of the aforementioned components of the apparatus 2300 and/or the processing system 2410 of the apparatus 2405 configured to perform the functions recited by the aforementioned means. As described elsewhere herein, the processing system 2410 may include the TX MIMO processor 266, the RX processor 258, and/or the controller/processor 280. In one configuration, the aforementioned means may be the TX MIMO processor 266, the RX processor 258, and/or the controller/processor 280 configured to perform the functions and/or operations recited herein.

Fig. 24 is provided as an example. Other examples may differ from what is described in connection with Fig. 24.

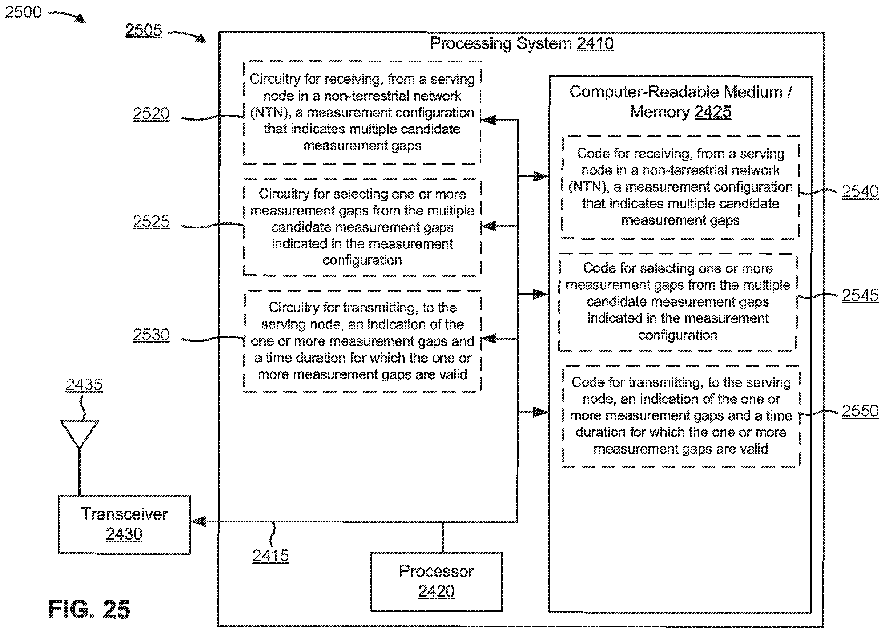

Fig. 25 is a diagram illustrating an example 2500 of an implementation of code and circuitry for an apparatus 2505. The apparatus 2505 may be a UE.

As further shown in Fig. 25, the apparatus may include circuitry for receiving, from a serving node associated with a serving cell in an NTN, a measurement configuration that indicates multiple candidate measurement gaps (circuitry 2520). For example, the apparatus may include circuitry to enable the apparatus to receive, from a serving node associated with a serving cell in an NTN, a measurement configuration that indicates multiple candidate measurement gaps.

As further shown in Fig. 25, the apparatus may include circuitry for selecting one or more measurement gaps from the multiple candidate measurement gaps indicated in the measurement configuration based at least in part on one or more characteristics of the serving cell or the UE (circuitry 2525). For example, the apparatus may include circuitry to enable the apparatus to select one or more measurement gaps from the multiple candidate measurement gaps indicated in the measurement configuration based at least in part on one or more characteristics of the serving cell or the UE.

As further shown in Fig. 25, the apparatus may include circuitry for transmitting, to the serving node, an indication of the one or more measurement gaps and a time duration for which the set of measurement gaps are valid (circuitry 2530). For example, the apparatus may include circuitry to enable the apparatus to transmit, to the serving node, an indication of the one or more measurement gaps and a time duration for which the set of measurement gaps are valid.

As further shown in Fig. 25, the apparatus may include, stored in computer-readable medium 2425, code for receiving, from a serving node in an NTN, a measurement configuration that indicates multiple candidate measurement gaps (code 2540). For example, the apparatus may include code that, when executed by the processor 2420, may cause the transceiver 2430 to receive, from a serving node in an NTN, a measurement configuration that indicates multiple candidate measurement gaps.

As further shown in Fig. 25, the apparatus may include, stored in computer-readable medium 2425, code for selecting one or more measurement gaps from the multiple candidate measurement gaps indicated in the measurement configuration based at least in part on one or more characteristics of the serving node or the UE (code 2545). For example, the apparatus may include code that, when executed by the processor 2420, may cause the transceiver 2430 to select one or more measurement gaps from the multiple candidate measurement gaps indicated in the measurement configuration based at least in part on one or more characteristics of the serving node or the UE.

As further shown in Fig. 25, the apparatus may include, stored in computer-readable medium 2425, code for transmitting, to the serving node, an indication of the one or more measurement gaps and a time duration for which the one or more measurement gaps are valid (code 2550). For example, the apparatus may include code that, when executed by the processor 2420, may cause the transceiver 2430 to transmit, to the serving node, an indication of the one or more measurement gaps and a time duration for which the one or more measurement gaps are valid.

Fig. 25 is provided as an example. Other examples may differ from what is described in connection with Fig. 25.

Fig. 26 is a diagram of an example apparatus 2600 for wireless communication. The apparatus 2600 may be a serving node, or a serving node may include the apparatus 2600. In some aspects, the apparatus 2600 includes a reception component 2602 and a transmission component 2604, which may be in communication with one another (for example, via one or more buses and/or one or more other components). As shown, the apparatus 2600 may communicate with another apparatus 2606 (such as a UE, a base station, or another wireless communication device) using the reception component 2602 and the transmission component 2604.

In some aspects, the apparatus 2600 may be configured to perform one or more operations described herein in connection with Figs. 6-12. Additionally, or alternatively, the apparatus 2600 may be configured to perform one or more processes described herein, such as process 1600 of Fig. 16. In some aspects, the apparatus 2600 and/or one or more components shown in Fig. 26 may include one or more components of the serving node described in connection with Fig. 2. Additionally, or alternatively, one or more components shown in Fig. 26 may be implemented within one or more components described in connection with Fig. 2. Additionally, or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 2602 may receive communications, such as reference signals, control information, data communications, or a combination thereof, from the apparatus 2606. The reception component 2602 may provide received communications to one or more other components of the apparatus 2600. In some aspects, the reception component 2602 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 2600. In some aspects, the reception component 2602 may include one or more antennas, a modem, a demodulator, a MIMO detector, a receive processor, a controller/processor, a memory, or a combination thereof, of the serving node described in connection with Fig. 2.

The transmission component 2604 may transmit communications, such as reference signals, control information, data communications, or a combination thereof, to the apparatus 2606. In some aspects, one or more other components of the apparatus 2600 may generate communications and may provide the generated communications to the transmission component 2604 for transmission to the apparatus 2606. In some aspects, the transmission component 2604 may perform signal processing on the generated communications (such as filtering, amplification, modulation, digital-to-analog conversion, multiplexing, interleaving, mapping, or encoding, among other examples), and may transmit the processed signals to the apparatus 2606. In some aspects, the transmission component 2604 may include one or more antennas, a modem, a modulator, a transmit MIMO processor, a transmit processor, a controller/processor, a memory, or a combination thereof, of the serving node described in connection with Fig. 2. In some aspects, the transmission component 2604 may be co-located with the reception component 2602 in a transceiver.

The transmission component 2604 may transmit, to a UE from the serving node in an NTN, a measurement configuration that indicates multiple candidate measurement gaps. The reception component 2602 may receive, from the UE, an indication of one or more measurement gaps selected from the multiple candidate measurement gaps indicated in the measurement configuration and a time duration for which the one or more measurement gaps are valid.

The transmission component 2604 may transmit, to the UE, a reconfiguration or an activation of one or more measurement gaps based at least in part on the set of measurement gaps reported to the serving node. The transmission component 2604 may transmit, to the UE, a request for an updated set of measurement gaps within the time duration for which the one or more measurement gaps are valid.

The number and arrangement of components shown in Fig. 26 are provided as an example. In practice, there may be additional components, fewer components, different components, or differently arranged components than those shown in Fig. 26. Furthermore, two or more components shown in Fig. 26 may be implemented within a single component, or a single component shown in Fig. 26 may be implemented as multiple, distributed components. Additionally, or alternatively, a set of (one or more) components shown in Fig. 26 may perform one or more functions described as being performed by another set of components shown in Fig. 26.

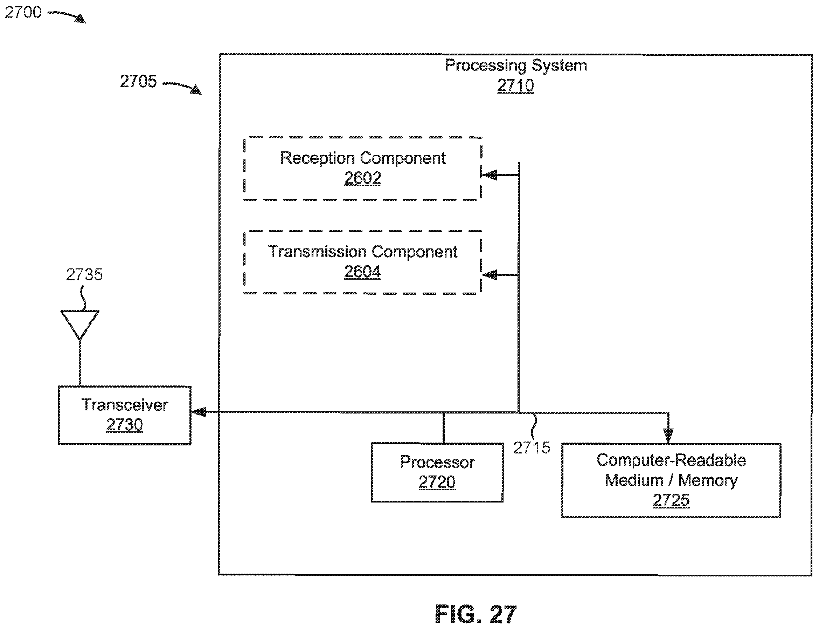

Fig. 27 is a diagram illustrating an example 2700 of a hardware implementation for an apparatus 2705 employing a processing system 2710. The apparatus 2705 may be a serving node (e.g., base station 110).

The processing system 2710 may be implemented with a bus architecture, represented generally by the bus 2715. The bus 2715 may include any number of interconnecting buses and bridges depending on the specific application of the processing system 2710 and the overall design constraints. The bus 2715 links together various circuits including one or more processors and/or hardware components, represented by the processor 2720, the illustrated components, and the computer-readable medium / memory 2725. The bus 2715 may also link various other circuits, such as timing sources, peripherals, voltage regulators, and/or power management circuits.

The processing system 2710 may be coupled to a transceiver 2730. The transceiver 2730 is coupled to one or more antennas 2735. The transceiver 2730 provides a means for communicating with various other apparatuses over a transmission medium. The transceiver 2730 receives a signal from the one or more antennas 2735, extracts information from the received signal, and provides the extracted information to the processing system 2710, specifically the reception component 2602. In addition, the transceiver 2730 receives information from the processing system 2710, specifically the transmission component 2604, and generates a signal to be applied to the one or more antennas 2735 based at least in part on the received information.

The processing system 2710 includes a processor 2720 coupled to a computer-readable medium / memory 2725. The processor 2720 is responsible for general processing, including the execution of software stored on the computer-readable medium / memory 2725. The software, when executed by the processor 2720, causes the processing system 2710 to perform the various functions described herein for any particular apparatus. The computer-readable medium / memory 2725 may also be used for storing data that is manipulated by the processor 2720 when executing software. The processing system further includes at least one of the illustrated components. The components may be software modules running in the processor 2720, resident/stored in the computer readable medium / memory 2725, one or more hardware modules coupled to the processor 2720, or some combination thereof.

In some aspects, the processing system 2710 may be a component of the base station 110 and may include the memory 242 and/or at least one of the TX MIMO processor 230, the RX processor 238, and/or the controller/processor 240. In some aspects, the apparatus 2705 for wireless communication includes means for transmitting, to a UE from the serving node which is associated with a serving cell in an NTN, a measurement configuration that indicates multiple candidate measurement gaps; and means for receiving, from the UE, an indication of a set of measurement gaps selected from the multiple candidate measurement gaps indicated in the measurement configuration and an amount of time for which the set of measurement gaps is valid. The aforementioned means may be one or more of the aforementioned components of the apparatus 2600 and/or the processing system 2710 of the apparatus 2705 configured to perform the functions recited by the aforementioned means. As described elsewhere herein, the processing system 2710 may include the TX MIMO processor 230, the receive processor 238, and/or the controller/processor 240. In one configuration, the aforementioned means may be the TX MIMO processor 230, the receive processor 238, and/or the controller/processor 240 configured to perform the functions and/or operations recited herein.

Fig. 27 is provided as an example. Other examples may differ from what is described in connection with Fig. 27.

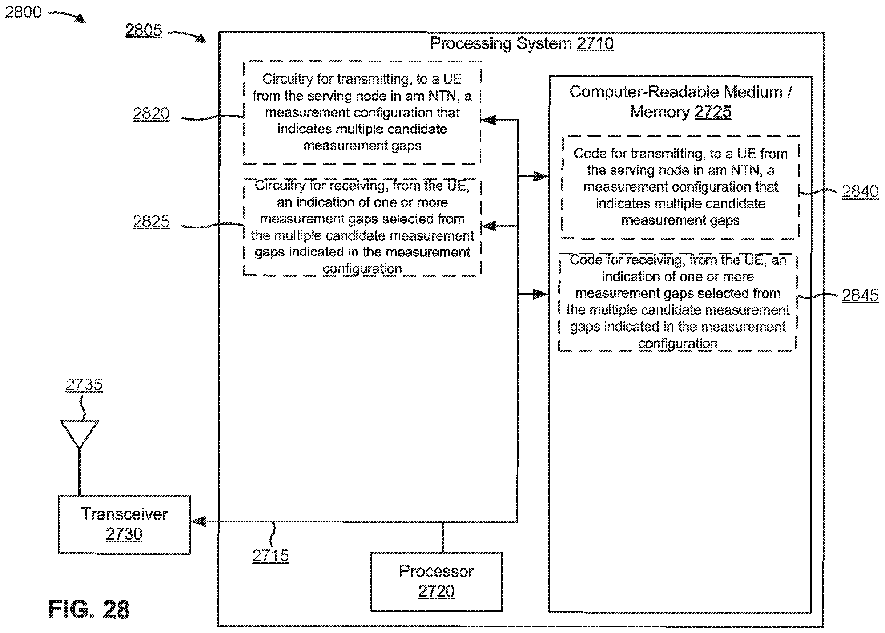

Fig. 28 is a diagram illustrating an example 2800 of an implementation of code and circuitry for an apparatus 2805. The apparatus 2805 may be a UE.

As further shown in Fig. 28, the apparatus may include circuitry for transmitting, to a UE from the serving node in an NTN, a measurement configuration that indicates multiple candidate measurement gaps (circuitry 2820). For example, the apparatus may include circuitry to enable the apparatus to transmit, to a UE from the serving node in an NTN, a measurement configuration that indicates multiple candidate measurement gaps.

As further shown in Fig. 28, the apparatus may include circuitry for receiving, from the UE, an indication of one or more measurement gaps selected from the multiple candidate measurement gaps indicated in the measurement configuration and a time duration for which the one or more measurement gaps are valid (circuitry 2825). For example, the apparatus may include circuitry to enable the apparatus to receive, from the UE, an indication of one or more measurement gaps selected from the multiple candidate measurement gaps indicated in the measurement configuration and a time duration for which the one or more measurement gaps is valid.

As further shown in Fig. 28, the apparatus may include, stored in computer-readable medium 2725, code for transmitting, to a UE from the serving node in an NTN, a measurement configuration that indicates multiple candidate measurement gaps (code 2840). For example, the apparatus may include code that, when executed by the processor 2720, may cause the transceiver 2730 to transmit, to a UE from the serving node in an NTN, a measurement configuration that indicates multiple candidate measurement gaps.

As further shown in Fig. 28, the apparatus may include, stored in computer-readable medium 2725, code for receiving, from the UE, an indication of one or more measurement gaps selected from the multiple candidate measurement gaps indicated in the measurement configuration and a time duration for which the one or more measurement gaps are valid (code 2845). For example, the apparatus may include code that, when executed by the processor 2720, may cause the transceiver 2730 to receive, from the UE, an indication of one or more measurement gaps selected from the multiple candidate measurement gaps indicated in the measurement configuration and a time duration for which the one or more measurement gaps are valid.

Fig. 28 is provided as an example. Other examples may differ from what is described in connection with Fig. 28.

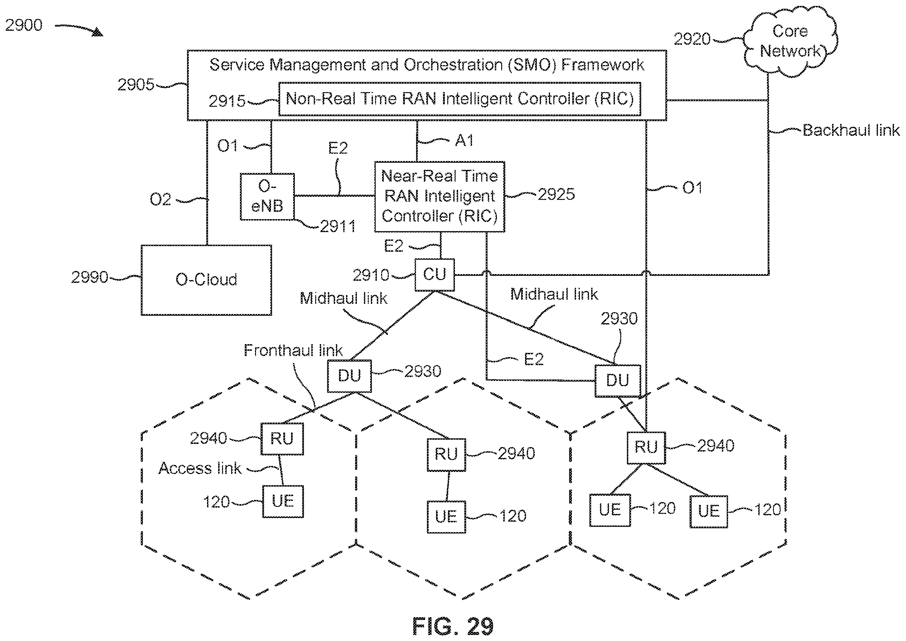

Fig. 29 is a diagram illustrating an example 2900 of a disaggregated base station architecture, in accordance with the present disclosure.

Deployment of communication systems, such as 5G NR systems, may be arranged in multiple manners with various components or constituent parts. In a 5G NR system, or network, a network node, a network entity, a mobility element of a network, a RAN node, a core network node, a network element, or a network equipment, such as a base station (BS, e.g., base station 110), or one or more units (or one or more components) performing base station functionality, may be implemented in an aggregated or disaggregated architecture. For example, a BS (such as a Node B (NB), eNB, NR BS, 5G NB, access point (AP), a TRP, a cell, or the like) may be implemented as an aggregated base station (also known as a standalone BS or a monolithic BS) or a disaggregated base station.

An aggregated base station may be configured to utilize a radio protocol stack that is physically or logically integrated within a single RAN node. A disaggregated base station may be configured to utilize a protocol stack that is physically or logically distributed among two or more units (such as one or more CUs, one or more DUs, or one or more RUs). In some aspects, a CU may be implemented within a RAN node, and one or more DUs may be co-located with the CU, or alternatively, may be geographically or virtually distributed throughout one or multiple other RAN nodes. The DUs may be implemented to communicate with one or more RUs. Each of the CU, DU, and RU also can be implemented as virtual units, e.g., a virtual centralized unit (VCU), a virtual distributed unit (VDU), or a virtual radio unit (VRU).

Base station-type operation or network design may consider aggregation characteristics of base station functionality. For example, disaggregated base stations may be utilized in an IAB network, an O-RAN (such as the network configuration sponsored by the O-RAN Alliance), or a virtualized radio access network (vRAN, also known as a cloud radio access network (C-RAN)). Disaggregation may include distributing functionality across two or more units at various physical locations, as well as distributing functionality for at least one unit virtually, which can enable flexibility in network design. The various units of the disaggregated base station, or disaggregated RAN architecture, can be configured for wired or wireless communication with at least one other unit.

The disaggregated base station architecture shown in Fig. 29 may include one or more CUs 2910 that can communicate directly with a core network 2920 via a backhaul link, or indirectly with the core network 2920 through one or more disaggregated base station units (such as a Near-RT RIC 2925 via an E2 link, or a Non-RT RIC 2915 associated with a Service Management and Orchestration (SMO) Framework 2905, or both). A CU 2910 may communicate with one or more DUs 2930 via respective midhaul links, such as an F1 interface. The DUs 2930 may communicate with one or more RUs 2940 via respective fronthaul links. The RUs 2940 may communicate with respective UEs 120 via one or more radio frequency (RF) access links. In some implementations, the UE 120 may be simultaneously served by multiple RUs 2940.

Each of the units (e.g., the CUs 2910, the DUs 2930, the RUs 2940), as well as the Near-RT RICs 2925, the Non-RT RICs 2915, and the SMO Framework 2905, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as an RF transceiver), configured to receive or transmit signals, or both, over a wireless transmission medium to one or more of the other units.

In some aspects, the CU 2910 may host one or more higher layer control functions. Such control functions can include radio resource control (RRC), packet data convergence protocol (PDCP), service data adaptation protocol (SDAP), or the like. Each control function can be implemented with an interface configured to communicate signals with other control functions hosted by the CU 2910. The CU 2910 may be configured to handle user plane functionality (e.g., Central Unit - User Plane (CU-UP)), control plane functionality (e.g., Central Unit - Control Plane (CU-CP)), or a combination thereof. In some implementations, the CU 2910 can be logically split into one or more CU-UP units and one or more CU-CP units. The CU-UP unit can communicate bidirectionally with the CU-CP unit via an interface, such as the E1 interface when implemented in an O-RAN configuration. The CU 2910 can be implemented to communicate with the DU 2930, as necessary, for network control and signaling.

The DU 2930 may correspond to a logical unit that includes one or more base station functions to control the operation of one or more RUs 2940. In some aspects, the DU 2930 may host one or more of a radio link control (RLC) layer, a medium access control (MAC) layer, and one or more high physical (PHY) layers (such as modules for forward error correction (FEC) encoding and decoding, scrambling, modulation and demodulation, or the like) depending, at least in part, on a functional split, such as those defined by the 3GPP. In some aspects, the DU 2930 may further host one or more low-PHY layers. Each layer (or module) can be implemented with an interface configured to communicate signals with other layers (and modules) hosted by the DU 2930, or with the control functions hosted by the CU 2910.

Lower-layer functionality can be implemented by one or more RUs 2940. In some deployments, an RU 2940, controlled by a DU 2930, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 2940 can be implemented to handle over the air (OTA) communication with one or more UEs 120. In some implementations, real-time and non-real-time aspects of control and user plane communication with the RU(s) 2940 can be controlled by the corresponding DU 2930. In some scenarios, this configuration can enable the DU(s) 2930 and the CU 2910 to be implemented in a cloud-based RAN architecture, such as a vRAN architecture.

The SMO Framework 2905 may be configured to support RAN deployment and provisioning of non-virtualized and virtualized network elements. For non-virtualized network elements, the SMO Framework 2905 may be configured to support the deployment of dedicated physical resources for RAN coverage requirements which may be managed via an operations and maintenance interface (such as an O1 interface). For virtualized network elements, the SMO Framework 2905 may be configured to interact with a cloud computing platform (such as an open cloud (O-Cloud) 2990) to perform network element life cycle management (such as to instantiate virtualized network elements) via a cloud computing platform interface (such as an O2 interface). Such virtualized network elements can include, but are not limited to, CUs 2910, DUs 2930, RUs 2940 and Near-RT RICs 2925. In some implementations, the SMO Framework 2905 can communicate with a hardware aspect of a 4G RAN, such as an open eNB (O-eNB) 2911, via an O1 interface. Additionally, in some implementations, the SMO Framework 2905 can communicate directly with one or more RUs 2940 via an O1 interface. The SMO Framework 2905 also may include a Non-RT RIC 2915 configured to support functionality of the SMO Framework 2905.

The Non-RT RIC 2915 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 2925. The Non-RT RIC 2915 may be coupled to or communicate with (such as via an A1 interface) the Near-RT RIC 2925. The Near-RT RIC 2925 may be configured to include a logical function that enables near-real-time control and optimization of RAN elements and resources via data collection and actions over an interface (such as via an E2 interface) connecting one or more CUs 2910, one or more DUs 2930, or both, as well as an O-eNB, with the Near-RT RIC 2925.

In some implementations, to generate AI/ML models to be deployed in the Near-RT RIC 2925, the Non-RT RIC 2915 may receive parameters or external enrichment information from external servers. Such information may be utilized by the Near-RT RIC 2925 and may be received at the SMO Framework 2905 or the Non-RT RIC 2915 from non-network data sources or from network functions. In some examples, the Non-RT RIC 2915 or the Near-RT RIC 2925 may be configured to tune RAN behavior or performance. For example, the Non-RT RIC 2915 may monitor long-term trends and patterns for performance and employ AI/ML models to perform corrective actions through the SMO Framework 2905 (such as reconfiguration via O1) or via creation of RAN management policies (such as A1 policies).

As indicated above, Fig. 29 is provided as an example. Other examples may differ from what is described with regard to Fig. 29.

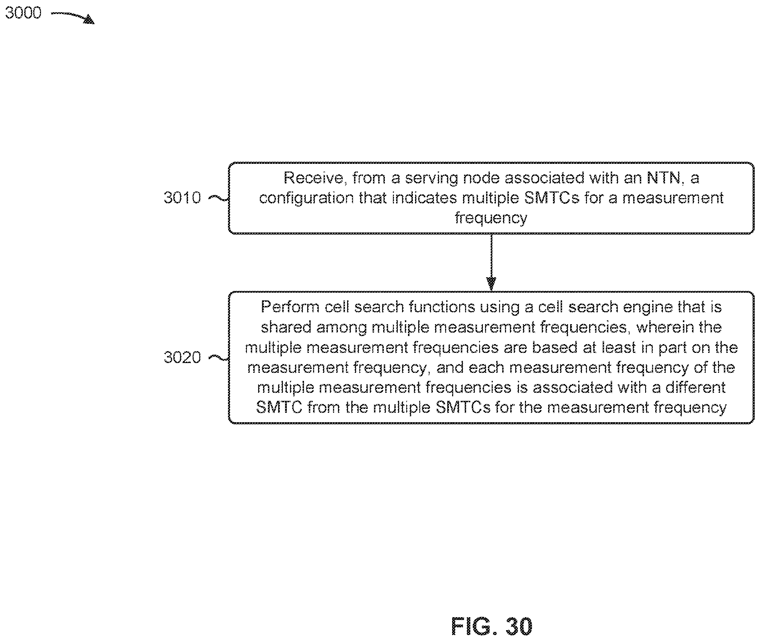

Fig. 30 is a diagram illustrating an example process 3000 performed, for example, by a UE, in accordance with the present disclosure. Example process 3000 is an example where the UE (e.g., UE 120) performs operations associated with performing measurements for NTNs.

As shown in Fig. 30, in some aspects, process 3000 may include receiving, from a serving node associated with an NTN, a configuration that indicates multiple SMTCs for a measurement frequency (block 3010). For example, the UE (e.g., using communication manager 140 and/or reception component 2002, depicted in Fig. 20) may receive, from a serving node associated with an NTN, a configuration that indicates multiple SMTCs for a measurement frequency, as described above.

As further shown in Fig. 30, in some aspects, process 3000 may include performing cell search functions using a cell search engine that is shared among multiple measurement frequencies, wherein the multiple measurement frequencies are based at least in part on the measurement frequency, and each measurement frequency of the multiple measurement frequencies is associated with a different SMTC from the multiple SMTCs for the measurement frequency (block 3020). For example, the UE (e.g., using communication manager 140 and/or performance component 2010, depicted in Fig. 20) may perform cell search functions using a cell search engine that is shared among multiple measurement frequencies, wherein the multiple measurement frequencies are based at least in part on the measurement frequency, and each measurement frequency of the multiple measurement frequencies is associated with a different SMTC from the multiple SMTCs for the measurement frequency, as described above.

Although Fig. 30 shows example blocks of process 3000, in some aspects, process 3000 may include additional blocks, fewer blocks, different blocks, or differently arranged blocks than those depicted in Fig. 30. Additionally, or alternatively, two or more of the blocks of process 3000 may be performed in parallel.

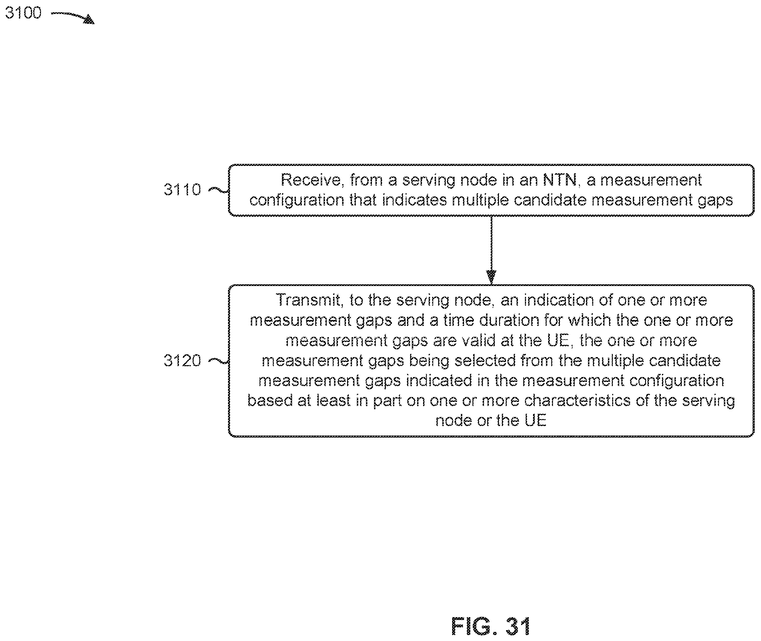

Fig. 31 is a diagram illustrating an example process 3100 performed, for example, by a UE, in accordance with the present disclosure. Example process 3100 is an example where the UE (e.g., UE 120) performs operations associated with performing measurements for NTNs.

As shown in Fig. 31, in some aspects, process 3100 may include receiving, from a serving node in an NTN, a measurement configuration that indicates multiple candidate measurement gaps (block 3110). For example, the UE (e.g., using communication manager 140 and/or reception component 2302, depicted in Fig. 23) may receive, from a serving node in an NTN, a measurement configuration that indicates multiple candidate measurement gaps, as described above.

As further shown in Fig. 31, in some aspects, process 3100 may include transmitting, to the serving node, an indication of one or more measurement gaps and a time duration for which the one or more measurement gaps are valid at the UE, the one or more measurement gaps being selected from the multiple candidate measurement gaps indicated in the measurement configuration based at least in part on one or more characteristics of the serving node or the UE (block 3130). For example, the UE (e.g., using communication manager 140 and/or transmission component 2304, depicted in Fig. 23) may transmit, to the serving node, an indication of one or more measurement gaps and a time duration for which the one or more measurement gaps are valid at the UE, the one or more measurement gaps being selected from the multiple candidate measurement gaps indicated in the measurement configuration based at least in part on one or more characteristics of the serving node or the UE, as described above.

Although Fig. 31 shows example blocks of process 3100, in some aspects, process 3100 may include additional blocks, fewer blocks, different blocks, or differently arranged blocks than those depicted in Fig. 31. Additionally, or alternatively, two or more of the blocks of process 3100 may be performed in parallel.

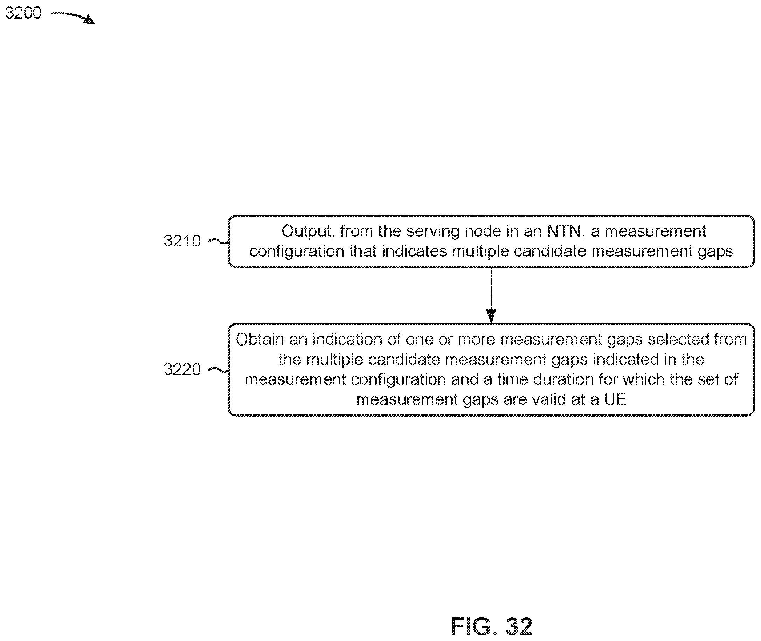

Fig. 32 is a diagram illustrating an example process 3200 performed, for example, by a serving node, in accordance with the present disclosure. Example process 3200 is an example where the serving node (e.g., base station 110) performs operations associated with performing measurements for NTNs.

As shown in Fig. 32, in some aspects, process 3200 may include outputting, from the serving node in an NTN, a measurement configuration that indicates multiple candidate measurement gaps (block 3210). For example, the serving node (e.g., using transmission component 2604, depicted in Fig. 26) may output, from the serving node in an NTN, a measurement configuration that indicates multiple candidate measurement gaps, as described above.

As further shown in Fig. 32, in some aspects, process 3200 may include obtaining an indication of one or more measurement gaps selected from the multiple candidate measurement gaps indicated in the measurement configuration and a time duration for which the set of measurement gaps are valid at a UE (block 3220). For example, the serving node (e.g., using reception component 2602, depicted in Fig. 26) may obtain an indication of one or more measurement gaps selected from the multiple candidate measurement gaps indicated in the measurement configuration and a time duration for which the set of measurement gaps are valid at a UE, as described above.

Although Fig. 32 shows example blocks of process 3200, in some aspects, process 3200 may include additional blocks, fewer blocks, different blocks, or differently arranged blocks than those depicted in Fig. 32. Additionally, or alternatively, two or more of the blocks of process 3200 may be performed in parallel.

The foregoing disclosure provides illustration and description but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a "processor" is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods are described herein without reference to specific software code, since those skilled in the art will understand that software and hardware can be designed to implement the systems and/or methods based, at least in part, on the description herein.

As used herein, "satisfying a threshold" may, depending on the context, refer to a value being greater than the threshold, greater than or equal to the threshold, less than the threshold, less than or equal to the threshold, equal to the threshold, not equal to the threshold, or the like.

## Claims

1. An apparatus for wireless communication comprised in a user equipment, UE, (120) comprising:
a memory; and
one or more processors coupled to the memory, the one or more processors configured to:
receive, from a serving node (112) in a non-terrestrial network, NTN, a measurement configuration that indicates multiple candidate measurement gaps; and
transmit, to the serving node, an indication of one or more measurement gaps and a time duration for which the one or more measurement gaps are valid at the UE, the one or more measurement gaps being selected from the multiple candidate measurement gaps indicated in the measurement configuration based at least in part on one or more characteristics of the serving node or the UE.

2. The apparatus of claim 1, wherein the one or more measurement gaps are based at least in part on one or more of: ephemeris information associated with the serving node, time-drift information associated with the serving node, UE position, synchronization signal block, SSB, measurement timing configurations, SMTC, parameters configured for the UE, a quantity of SMTCs supported in measurement gaps, candidate measurement gap parameters, a relative time offset between the serving node and neighbor nodes, the time duration for which the one or more measurement gaps are valid, or a loss of downlink resources due to measurement gaps.

3. The apparatus of claim 2, wherein the relative time offset is based at least in part on additional target or neighbor cell information that includes one or more of: ephemeris information, a time-drift rate, or a reference position;
wherein the reference position is associated with a center position of a serving cell and the candidate measurement gap parameters.

4. The apparatus of claim 1, wherein the one or more processors are further configured to:
receive, from the serving node, a reconfiguration or an activation of one or more measurement gaps based at least in part on the one or more measurement gaps reported to the serving node.

5. The apparatus of claim 1, wherein the one or more processors are further configured to:
receive, from the serving node, a request for an updated one or more measurement gaps within the time duration for which the one or more measurement gaps are valid.

6. The apparatus of claim 1, wherein the one or more measurement gaps are applicable for neighbor or target cell measurements from a satellite different from a serving satellite associated with the serving node.

7. An apparatus for wireless communication comprised in a serving node (112), comprising:
a memory; and
one or more processors coupled to the memory, the one or more processors configured to:
transmit, to a user equipment, UE, (120) from the serving node in a non-terrestrial network, NTN, a measurement configuration that indicates multiple candidate measurement gaps; and
obtain an indication of one or more measurement gaps selected from the multiple candidate measurement gaps indicated in the measurement configuration and a time duration for which the one or more measurement gaps are valid at the UE.

8. The apparatus of claim 7, wherein the one or more processors are further configured to:
transmit, to a user equipment, a reconfiguration or an activation of one or more measurement gaps based at least in part on the one or more measurement gaps reported to the serving node.

9. The apparatus of claim 7, wherein the one or more measurement gaps are based at least in part on one or more of: ephemeris information associated with the serving node, time-drift information associated with the serving node, UE position, synchronization signal block, SSB, measurement timing configurations, SMTC, parameters configured for the UE, a quantity of SMTCs supported in measurement gaps, candidate measurement gap parameters, a relative time offset between the serving node and neighbor nodes, the time duration for which the one or more measurement gaps are valid, or a loss of downlink resources due to measurement gaps;
wherein the relative time offset is preferably based at least in part on additional target or neighbor cell information that includes one or more of: ephemeris information, a time-drift rate, or a reference position.
and wherein the reference position is preferably associated with a center position of a serving cell or a position used by the serving node when configuring the SMTC parameters and the candidate measurement gap parameters.

10. The apparatus of claim 7, wherein the one or more processors are further configured to:
transmit, to a user equipment, a request for an updated one or more measurement gaps within the time duration for which the one or more measurement gaps are valid.

11. The apparatus of claim 7, wherein the one or more measurement gaps are applicable for neighbor or target cell measurements from a satellite different from a serving satellite associated with the serving node.

12. A method of wireless communication performed by a user equipment, UE, comprising:
receiving, from a serving node in a non-terrestrial network, NTN, a measurement configuration that indicates multiple candidate measurement gaps; and
transmitting, to the serving node, an indication of one or more measurement gaps and a time duration for which the one or more measurement gaps are valid at the UE, the one or more measurement gaps being selected from the multiple candidate measurement gaps indicated in the measurement configuration based at least in part on one or more characteristics of the serving node or the UE.

13. A method of wireless communication performed by a serving node, comprising:
transmitting, to a user equipment, UE, from the serving node in a non-terrestrial network, NTN, a measurement configuration that indicates multiple candidate measurement gaps; and
obtaining an indication of one or more measurement gaps selected from the multiple candidate measurement gaps indicated in the measurement configuration and a time duration for which the set of measurement gaps are valid at the UE.

14. A non-transitory computer-readable medium storing code for wireless communication, the code comprising instructions executable by a processor of a user equipment to perform the method of claim 12.

15. A non-transitory computer-readable medium storing code for wireless communication, the code comprising instructions executable by a processor of a serving node to perform the method of claim 13.

## Patentansprüche

1. Eine Vorrichtung für eine drahtlose Kommunikation in einem Benutzergerät (User Equipment bzw. UE) (120), die Folgendes aufweist:
einen Speicher, und
einen oder mehrere Prozessoren, die mit dem Speicher gekoppelt sind, wobei der eine oder die mehreren Prozessoren konfiguriert sind zum:
Empfangen, von einem dienenden Knoten (112) in einem nicht-terrestrischen Netz (NTN), einer Messkonfiguration, die mehrere Kandidaten-Messlücken angibt, und
Senden, an den dienenden Knoten, einer Angabe einer oder mehrerer Messlücken und einer Zeitdauer, für die die eine oder die mehreren Messlücken an dem UE gelten, wobei die eine oder die mehreren Messlücken aus den mehreren Kandidaten-Messlücken, die durch die Messkonfiguration angegeben werden, basierend wenigstens teilweise auf einer oder mehreren Eigenschaften des dienenden Knotens oder des UE ausgewählt werden.

2. Vorrichtung nach Anspruch 1, wobei die eine oder die mehreren Messlücken wenigstens teilweise auf einem oder mehreren der Folgenden basieren: Ephemerisinformationen, die mit dem dienenden Knoten assoziiert sind, Zeitverschiebungsinformationen, die mit dem dienenden Knoten assoziiert sind, einer UE-Position, Synchronisationssignalblock (SSB)-Messzeitkonfigurationen (Synchronisation Signal Block Measurement Timing Configurations bzw. SMTC)-Parameter, die für das UE konfiguriert sind, einer Anzahl von SMTCs, die in Messlücken unterstützt werden, Kandidaten-Messlücken-Parameter, einem relativen Zeitversatz zwischen dem dienenden Knoten und benachbarten Knoten, der Zeitdauer, für die die eine oder die mehreren Messlücken gelten, oder einem Verlust von Abwärtsstrecke-Ressourcen aufgrund von Messlücken.

3. Vorrichtung nach Anspruch 2, wobei der relative Zeitversatz wenigstens teilweise auf zusätzlichen Ziel- oder Nachbarzelleinformationen basiert, die wenigstens eines der Folgenden umfassen: Ephemerisinformationen, eine Zeitverschiebungsrate oder eine Referenzposition,
wobei die Referenzposition mit einer Mittenposition einer dienenden Zelle und mit den Kandidaten-Messlücken-Parametern assoziiert ist.

4. Vorrichtung nach Anspruch 1, wobei der eine oder die mehreren Prozessoren weiterhin konfiguriert sind zum:
Empfangen, von dem dienenden Knoten, einer Neukonfiguration oder einer Aktivierung einer oder mehrerer Messlücken basierend wenigstens teilweise auf dem einen oder den mehreren Messlücken, die an den dienenden Knoten berichtet werden.

5. Vorrichtung nach Anspruch 1, wobei der eine oder die mehreren Prozessoren weiterhin konfiguriert sind zum:
Empfangen, von dem dienenden Knoten, einer Anfrage für eine oder mehrere aktualisierte Messlücken innerhalb der Zeitdauer, für die die eine oder die mehreren Messlücken gelten.

6. Vorrichtung nach Anspruch 1, wobei die eine oder die mehreren Messlücken für Nachbar- oder Zielzellen-Messungen von einem anderen Satelliten als einem mit dem dienenden Knoten assoziierten dienenden Satelliten anwendbar sind.

7. Eine Vorrichtung für eine drahtlose Kommunikation in einem dienenden Knoten (112), die Folgendes aufweist:
einen Speicher, und
einen oder mehrere Prozessoren, die mit dem Speicher gekoppelt sind, wobei der eine oder die mehreren Prozessoren konfiguriert sind zum:
Senden, an ein Benutzergerät (User Equipment bzw. UE) (120) von dem dienenden Knoten in einem nicht-terrestrischen Netz (NTN), einer Messkonfiguration, die mehrere Kandidaten-Messlücken angibt, und
Erhalten einer Angabe einer oder mehrerer Messlücken, die aus den in der Messkonfiguration angegebenen mehreren Kandidaten-Messlücken ausgewählt sind, und einer Zeitdauer, für die die eine oder die mehreren Messlücken an dem UE gelten.

8. Vorrichtung nach Anspruch 7, wobei der eine oder die mehreren Prozessoren weiterhin konfiguriert sind zum:
Senden, an ein Benutzergerät, einer Neukonfiguration oder einer Aktivierung einer oder mehrerer Messlücken basierend wenigstens teilweise auf der einen oder den mehreren an den dienenden Knoten berichteten Messlücken.

9. Vorrichtung nach Anspruch 7, wobei die eine oder die mehreren Messlücken wenigstens teilweise auf einem oder mehreren der Folgenden basieren: Ephemerisinformationen, die mit dem dienenden Knoten assoziiert sind, Zeitverschiebungsinformationen, die mit dem dienenden Knoten assoziiert sind, einer UE-Position, Synchronisationssignalblock (SSB)-Messzeitkonfigurationen (Synchronisation Signal Block Measurement Timing Configurations bzw. SMTC)-Parameter, die für das UE konfiguriert sind, einer Anzahl von SMTCs, die in Messlücken unterstützt werden, Kandidaten-Messlücken-Parameter, einem relativen Zeitversatz zwischen dem dienenden Knoten und benachbarten Knoten, der Zeitdauer, für die die eine oder die mehreren Messlücken gelten, oder einem Verlust von Abwärtsstrecke-Ressourcen aufgrund von Messlücken,
wobei der relative Zeitversatz vorzugsweise wenigstens teilweise auf zusätzlichen Ziel- oder Nachbarzelleninformationen basiert, die wenigstens eines der Folgenden umfassen: Ephemerisinformationen, eine Zeitverschiebungsrate oder eine Referenzposition, und
wobei die Referenzposition vorzugsweise mit einer Mittenposition einer dienenden Zelle oder mit einer durch den dienenden Knoten bei der Konfiguration der SMTC-Parameter verwendeten Position und mit den Kandidaten-Messlücken-Parametern assoziiert ist.

10. Vorrichtung nach Anspruch 7, wobei der eine oder die mehreren Prozessoren weiterhin konfiguriert sind zum:
Senden, an ein Benutzergerät, einer Anfrage für eine oder mehrere aktualisierte Messlücken innerhalb der Zeitdauer, für die die eine oder die mehreren Messlücken gelten.

11. Vorrichtung nach Anspruch 7, wobei die eine oder die mehreren Messlücken für Nachbar- oder Zielzellen-Messungen von einem anderen Satelliten als einem mit dem dienenden Knoten assoziierten dienenden Satelliten anwendbar sind.

12. Ein Verfahren für eine drahtlose Kommunikation, das durch ein Benutzergerät (User Equipment bzw. UE) durchgeführt wird, das Folgendes aufweist:
Empfangen, von einem dienenden Knoten in einem nicht-terrestrischen Netz (NTN), einer Messkonfiguration, die mehrere Kandidaten-Messlücken angibt, und
Senden, an den dienenden Knoten, einer Angabe einer oder mehrerer Messlücken und einer Zeitdauer, für die die eine oder die mehreren Messlücken an dem UE gelten, wobei die eine oder die mehreren Messlücken aus den mehreren Kandidaten-Messlücken, die durch die Messkonfiguration angegeben werden, basierend wenigstens teilweise auf einer oder mehreren Eigenschaften des dienenden Knotens oder des UE ausgewählt werden.

13. Ein Verfahren für eine drahtlose Kommunikation, das durch einen dienenden Knoten durchgeführt wird, das Folgendes aufweist:
Senden, an ein Benutzergerät (User Equipment bzw. UE) von dem dienenden Knoten in einem nicht-terrestrischen Netz (NTN), einer Messkonfiguration, die mehrere Kandidaten-Messlücken angibt, und
Erhalten einer Angabe einer oder mehrerer Messlücken, die aus den in der Messkonfiguration angegebenen mehreren Kandidaten-Messlücken ausgewählt sind, und einer Zeitdauer, für die der Satz von Messlücken an dem UE gelten.

14. Ein nicht-transitorisches, computerlesbares Medium, das einen Code für eine drahtlose Kommunikation speichert, wobei der Code Befehle aufweist, die durch einen Prozessor von einem Benutzergerät (User Equipment bzw. UE) für das Durchführen des Verfahrens von Anspruch 12 ausgeführt werden können.

15. Ein nicht-transitorisches, computerlesbares Medium, das einen Code für eine drahtlose Kommunikation speichert, wobei der Code Befehle aufweist, die durch einen Prozessor von einem dienenden Knoten für das Durchführen des Verfahrens von Anspruch 13 ausgeführt werden können.

## Revendications

1. Un appareil de communication sans fil compris dans un équipement utilisateur, UE, (120) comprenant :
une mémoire ; et
un ou plusieurs processeurs couplés à la mémoire, le ou les processeurs étant configurés pour :
recevoir, à partir d'un nœud de desserte (112) dans un réseau non terrestre, NTN, une configuration de mesure qui indique de multiples intervalles de mesure candidats ; et
transmettre, au nœud de desserte, une indication d'un ou de plusieurs intervalles de mesure et une durée pendant laquelle le ou les intervalles de mesure sont valides au niveau de l'UE, le ou les intervalles de mesure étant sélectionnés parmi les multiples intervalles de mesure candidats indiqués dans la configuration de mesure basée au moins en partie sur une ou plusieurs caractéristiques du nœud de desserte ou de l'UE.

2. Appareil selon la revendication 1, dans lequel le ou les intervalles de mesure sont basés au moins en partie sur un ou plusieurs des éléments suivants : informations d'éphémérides associées au nœud de desserte, informations de dérive temporelle associées au nœud de desserte, position de l'UE, bloc de signal de synchronisation, SSB, paramètres de configuration de moment de mesure, SMTC, configurés pour l'UE, une quantité de SMTC pris en charge dans les intervalles de mesure, paramètres d'intervalle de mesure candidats, un décalage temporel relatif entre le nœud de desserte et les nœuds voisins, la durée pendant laquelle le ou les intervalles de mesure sont valides, ou une perte de ressources de liaison descendante en raison d'intervalles de mesure.

3. Appareil selon la revendication 2, dans lequel le décalage temporel relatif est basé au moins en partie sur des informations supplémentaires sur la cellule cible ou voisine qui comprennent un ou plusieurs des éléments suivants : des informations d'éphémérides, un taux de dérive temporelle ou une position de référence ;
dans lequel la position de référence est associée à une position centrale d'une cellule de desserte et aux paramètres d'intervalle de mesure candidats.

4. Appareil selon la revendication 1, dans lequel le ou les processeurs sont en outre configurés pour :
recevoir, du nœud de desserte, une reconfiguration ou une activation d'un ou de plusieurs intervalles de mesure sur la base, au moins en partie, du ou des intervalles de mesure signalés au nœud de desserte.

5. Appareil selon la revendication 1, dans lequel le ou les processeurs sont en outre configurés pour :
recevoir, du nœud de desserte, une demande d'un ou de plusieurs intervalles de mesure mis à jour dans la durée pendant laquelle le ou les intervalles de mesure sont valides.

6. Appareil selon la revendication 1, dans lequel le ou les intervalles de mesure sont applicables pour des mesures de cellules voisines ou cibles à partir d'un satellite différent d'un satellite de desserte associé au nœud de desserte.

7. Appareil de communication sans fil compris dans un nœud de desserte (112), comprenant :
une mémoire ; et
un ou plusieurs processeurs couplés à la mémoire, le ou plusieurs processeurs configurés pour :
transmettre, à un équipement utilisateur, UE, (120) à partir du nœud de desserte dans un réseau non terrestre, NTN, une configuration de mesure qui indique de multiples intervalles de mesure candidats ; et
obtenir une indication d'un ou de plusieurs intervalles de mesure sélectionnés parmi les multiples intervalles de mesure candidats indiqués dans la configuration de mesure et une durée pendant laquelle le ou les intervalles de mesure sont valides au niveau de l'UE.

8. Appareil selon la revendication 7, dans lequel le ou les processeurs sont en outre configurés pour :
transmettre, à un équipement utilisateur, une reconfiguration ou une activation d'un ou de plusieurs intervalles de mesure sur la base, au moins en partie, d'un ou de plusieurs intervalles de mesure signalés au nœud de desserte.

9. Appareil selon la revendication 7, dans lequel le ou les intervalles de mesure sont basés au moins en partie sur un ou plusieurs des éléments suivants : informations d'éphémérides associées au nœud de desserte, informations de dérive temporelle associées au nœud de desserte, position de l'UE, bloc de signal de synchronisation, SSB, paramètres de configuration de moment de mesure, SMTC, configurés pour l'UE, une quantité de SMTC pris en charge dans les intervalles de mesure, paramètres d'intervalle de mesure candidats, un décalage temporel relatif entre le nœud de desserte et les nœuds voisins, la durée pendant laquelle le ou les intervalles de mesure sont valides, ou une perte de ressources de liaison descendante due à des intervalles de mesure ;
dans lequel le décalage temporel relatif est de préférence basé au moins en partie sur des informations supplémentaires sur la cellule cible ou voisine qui comprennent un ou plusieurs des éléments suivants : des informations d'éphémérides, un taux de dérive temporelle ou une position de référence,
et dans lequel la position de référence est de préférence associée à une position centrale d'une cellule de desserte ou à une position utilisée par le nœud de desserte lors de la configuration des paramètres SMTC et des paramètres d'intervalle de mesure candidats.

10. Appareil selon la revendication 7, dans lequel le ou les processeurs sont en outre configurés pour :
transmettre, à un équipement utilisateur, une demande d'un ou de plusieurs intervalles de mesure mis à jour dans la durée pendant laquelle le ou les intervalles de mesure sont valides.

11. Appareil selon la revendication 7, dans lequel le ou les intervalles de mesure sont applicables pour des mesures de cellules voisines ou cibles à partir d'un satellite différent d'un satellite de desserte associé au nœud de desserte.

12. Procédé de communication sans fil effectué par un équipement utilisateur, UE, comprenant les étapes consistant à :
recevoir, à partir d'un nœud de desserte dans un réseau non terrestre, NTN, une configuration de mesure qui indique de multiples intervalles de mesure candidats ; et
transmettre, au nœud de desserte, une indication d'un ou de plusieurs intervalles de mesure et une durée pendant laquelle l'un ou les plusieurs intervalles de mesure sont valides au niveau de l'UE, l'un ou les plusieurs intervalles de mesure étant sélectionnés parmi les multiples intervalles de mesure candidats indiqués dans la configuration de mesure sur la base, au moins en partie, d'une ou de plusieurs caractéristiques du nœud de desserte ou de l'UE.

13. Procédé de communication sans fil effectué par un nœud de desserte, comprenant les étapes consistant à :
transmettre, à un équipement utilisateur, UE, à partir du nœud de desserte dans un réseau non terrestre, NTN, une configuration de mesure qui indique de multiples intervalles de mesure candidats ; et
obtenir une indication d'un ou de plusieurs intervalles de mesure sélectionnés parmi les multiples intervalles de mesure candidats indiqués dans la configuration de mesure et une durée pendant laquelle l'ensemble des intervalles de mesure est valide au niveau de l'UE.

14. Un support non transitoire lisible par ordinateur stockant un code pour la communication sans fil, le code comprenant des instructions exécutables par un processeur d'un équipement utilisateur pour exécuter le procédé de la revendication 12.

15. Un support non transitoire lisible par ordinateur stockant un code pour la communication sans fil, le code comprenant des instructions exécutables par un processeur d'un nœud de desserte pour exécuter le procédé de la revendication 13.
